# EUROPÄISCHE PATENTSCHRIFT

(11) **EP 2 406 697 B1**
(45) Veröffentlichungstag und Bekanntmachung des Hinweises auf die Patenterteilung: **13.04.2016**
(21) Anmeldenummer: 10717087.0
(22) Anmeldetag: 15.04.2010
(51) Int. Cl.: G06F 3/01, G06K 9/00

(54) **PROGRAMM UND SYSTEM ZUM ERKENNEN EINES OBJEKTES IN EINER BILDSCHIRMDARSTELLUNG**
PROGRAM AND SYSTEM FOR DETECTING AN OBJECT ON A DISPLAY SCREEN
PROGRAMME ET SYSTÈME DE DÉTECTION D'UN OBJET DANS UNE REPRÉSENTATION SUR ÉCRAN

(30) Priorität: 16.04.2009 DE 102009017772
(43) Veröffentlichungstag der Anmeldung: 18.01.2012
(60) Teilanmeldung: 16157038.7
(73) Patentinhaber: Fraunhofer-Gesellschaft zur Förderung der angewandten Forschung e.V., 80686 München (DE)
(72) Erfinder: WITTENBERG, Thomas, 91054 Erlangen (DE); MÜNZENMAYER, Christian, 90409 Nürnberg (DE); KÜBLBECK, Christian, verstorben (DE); ERNST, Andreas, 92637 Weiden (DE)
(74) Vertreter: Schenk, Markus
(86) Internationale Anmeldenummer: PCT/EP2010/054932
(87) Internationale Veröffentlichungsnummer: WO 2010/119085

(56) Entgegenhaltungen:
- EP-A2- 1 553 516
- US-A1- 2004 189 720
- US-A1- 2005 271 279
- US-A1- 2007 125 633

## Beschreibung

Die vorliegende Anmeldung bezieht sich auf Verfahren und Systeme zum Erkennen eines Objektes, z. B. zum Erkennen von Körperteilen oder Gesten, und Verfahren und Systemen zum Erzeugen einer Markierung in einer Bildschirmdarstellung mittels berührungslos gestik-gesteuerter Bildschirmzeiger.

In den vergangenen 30 Jahren haben sich bildgebende Verfahren wie Röntgen, Computertomographie (CT), Ultraschall, Magnetresonanztomographie (MRI - magnetic resonant imaging), oder Endoskopie in der medizinischen Routine etabliert, wie beispielsweise im Kontext von klinischen Aufgaben wie der Computer-Assistierten Diagnose (CAD), der dreidimensionalen Visualisierung (3D-Visualisierung), der Planung von chirurgischen Eingriffen oder der interventionellen Bildgebung und Navigation. Da die meisten dieser bildbasierten Einsatzgebiete überwiegend prä-operativ stattfinden, stellt die direkte Interaktion eines Arztes mit der Benutzerschnittstelle des Computer-Systems kein Problem dar, um beispielsweise Parameter der Bildverarbeitung und Bilddarstellung zu verändern, oder eine Bildregion oder ein Bildvolumen interaktiv zu segmentieren. Für derartige Mensch-Maschine-Interaktionen (MMI) werden typischerweise Eingabegeräte wie Maus, Joy-Stick, Tastatur, oder auch Berührungsmonitore (Touch-Monitore) verwendet, wobei als Eingabemedium Finger oder Stifte zum Einsatz kommen.

In sterilen Umgebungen, wie im einem Operationsraum (OP) sind direkte berührungsabhängige Interaktionen zwischen dem Chirurgen und Bildverarbeitungssystemen kaum möglich und auch nicht immer machbar. Neben der Nutzung von zusätzlichen und teurem Personal zur Steuerung der Geräte wurden in den vergangenen Jahren alternative Technologien für eine berührungslose Interaktion zwischen Mensch und Maschine entwickelt, und zwar die Spracheingabe, sowie die Interaktion mittels Gestik.

Während die sprachbasierte Interaktion für die Kommando-Steuerung, sog. Sprach-zu-Kommando-Systeme, im Englischen auch als "voice-to-command - Systeme bezeichnet, von Operations-Hardware (OP-Hardware), wie Operations-Tisch (OPTisch), Operationsbeleuchtung (OP-Beleuchtung) mittels Sprachkommandos, z. B. "aus", "an", "rauf", "runter", "heller", "höher", usw., heute zum Stand der Technik gehört, siehe z. B. SIOS-System von Siemens Health Care oder das CORE-System der Fa. Richard Wolf, wurde die sprachgesteuerte Interaktion von Bildanalyseverfahren bisher nur am Beispiel der Segmentierung von Aneurysmen demonstriert und exemplarisch evaluiert, siehe beispielsweise M. Prümmer, E. Nöth, J. Hornegger, A. Horndasch: Mensch-Maschine Interaktion für den interventionellen Einsatz. In: H.P. Meinzer, H. Handels, A. Horsch, T. Tolxdorff: Bildverarbeitung für die Medizin 2005, Springer-Verlag, Heidelberg, pp. 485-489; E. Nöth, M. Prümmer, J. Hornegger, F. Gallwitz, R. Huber: Sprachgesteuerte 3D-Angiographie - Die Software folgt dem Arzt aufs Wort. In Design & Elektronik Entwicklerforum Sprachsteuerung, München, 2004.

Gestik-basierte Interaktion zwischen Mensch und Maschine war in den vergangenen Jahren ein großes internationales Forschungsgebiet, siehe beispielsweise Camurri, F. Volpe: Gesture-Based Communication in Human-Computer Interaction. 5th In. Gesture Workshop, Genova, Italy, April 15-17, 2003, Springer-Verlag , 2003. In jüngster Zeit haben sich allerdings die grundlagenorientierten Forschungsaktivitäten in Richtung konkreter Anwendungen verschoben. Derzeit können dabei drei wichtige Anwendungsgebiete identifiziert werden, in denen einen berührungslose Interaktion zwischen Mensch und Maschine nicht nur geeignet, sondern partiell auch zwingend notwendig ist. Zu diesen, sich im Fokus der anwendungsorientierten Forschung befindlichen Szenarien gehören die Bereiche Automobiltechnik, im Englischen auch "Automotive" bezeichnet, "Heimpflege", im Englischen auch als "Home Care" bzw. "Ambient Assisted Living" bezeichnet sowie die interventionelle Medizintechnik. Im Bereich der Automobiltechnik werden gesten-basierte Interaktionen dort untersucht, wo sich die Interaktionen zwischen Benutzern und Maschinen durch Gestik direkter und schneller durchführen lassen als mit der Sprache. So kann beispielsweise das Annehmen oder die Initiierung eines Telefongesprächs während der Fahrt durch das emittierte Abheben eines Telefonhörers erfolgen, siehe beispielsweise M. Geiger, R. Nieschulz, M. Zobl, M. Lang: Bedienkonzept zur gesten-basierten Interaktion mit Geräten im Automobil - Gesture-Based Control Concept for In-Car Devices, VDI-Bericht 1678 "Useware 2002", VDI-Verlage. Eine Alternative ist das berührungslose Zeigen auf den Bildschirm zur Auswahl einer von mehreren Optionen, wie es beispielsweise im Projekt "Point Screen" durch die Forschungsgruppe MARS am Fraunhofer Institut IAIS für Medienkommunikation realisiert wurde, auf einer Messung des elektromagnetischen Spannungsfeldes des Benutzers beruht. Diese und ähnliche Techniken werden aktuell in vielen Szenarien im Bereich des sog. "Ambient Assisted Living" (AAL) sowie in Home Care Szenarien untersucht, bei denen die meist älteren Benutzer berührungslos mit vordefinierten Gesten Geräte wie Fernseher, Radio, Herd, Telefon, etc. steuern können.

Das jüngste Forschungsszenario für eine berührungslose Interaktion zwischen Mensch und Maschine bilden sog. sterile Bereiche, wie z. B. Operationsräume, in denen jährlich mehr technische Geräte integriert werden, die allerdings von immer weniger verfügbarem Personal bedient werden sollen bzw. aus Kostengründen, müssen.

Eine berührungslose Bildsteuerung von medizinischen Visualisierungsgeräten mittels "Einzelwortgesten" für Kommandos, wie z. B. "Rechtsdrehen", "Linksdrehen", "nächstes Bild" etc., wurde vom Fraunhofer Institut HHI vorgestellt und basiert auf der Basis einer Anordnung mehrerer Infrarot-Kameras unter Nutzung einer speziellen Beleuchtung mit einem Infrarot-LED-Array (LED - light emitting diode = lichtausstrahlende Diode).

Ebenso auf einer Spezialkamera beruhen die Forschungsarbeiten der Universität Erlangen. Hier werden sog. Flugzeitkameras, im Englischen auch als "Time-Of-Flight" (TOF) Kameras mit einer Auflösung von 160 x 160 Bildpunkten verwendet, um Tiefenbilder der Hand und der damit erzeugten Geste zu erfassen und diese zu klassifizieren, siehe z. B. J. Penne, S. Soutschek, C. Schaller, J. Hornegger: Robust Real-Time 3D Time-of-Flight Based Gesture Navigation, in: n: Computer Assisted Radiology and Surgery 2008 3 (2008) No. 5 pp. 427-431.; J. Penne, S. Soutschek, L. Fedorowicz, J. Hornegger: Robust Real-Time 3D Time-of-Flight Based Gesture Navigation: in: j: Cohn; T. Huang, M. Pantic, N. Sebe (Eds.) Proc's 8th IEEE Int. Conf. Automatic Face & Gesture Recognition, Amsterdam, The Netherlands 2008, pp. 335; J. Penne, S. Soutschek, C. Schaller, J. Hornegger: Robust Real-Time 3D Time-of Flight Based Gesture Navigation, in: U. Lucke, MC Kindsmüller, S. Fischer Stefan; M. Herczeg, Michael; S. Seehusen (Eds.). Proc's Mensch & Computer 2008, DeLFI 2008 und Cognitive Design 2008 Lübeck. Logos Verlag, Berlin 2008, pp. 79-81; E. Kollorz, J. Penne, J. Hornegger, J. Kornhuber: Human Mchine Interface for Elderly People, in: Tagungsband zum 1. deutschen AAL-Kongress Berlin 2008. Berlin: VDE Verlag Offenbach 2008, pp. 383-386; E. Kollerz, J. Hornegger. Gesture recognition with a time-of-flight camera, 2007, in DAGM e.V. 2007 - Proceedings of the work-shop Dynamic 3D Imaging in conjunction with DAGM'07; S. Soutschek, J. Penne, J. Hornegger, J. Kornhuber: 3-D Gesture-Based Scene Navigation in Medical Imaging Applications Using Time-Of-Flight Cameras In: IEEE Comp. Soc. Conf. On Computer Vision and Pattern Recognition, Anchorage, AK 23 - 28.6.2008.

Ein ähnlicher Ansatz der Gestik-Erkennung für interventionelle Bereiche, der auch auf dem TOF-Prinzip beruht, wurde kürzlich vom Fraunhofer Institut IPK vorgestellt, siehe Rose, D. Eichel, T. Krueger: A comparison of gesture and speech control in intraoprative-near enviroment, in J. Vander Sloten, P. Verdonck, M. Nyssen, J. Haueisen (Eds.): E-CIFMBE 2008, IFMBE Proceedings 22, pp. 1574-1576, 2008.

Ein System für die Interaktion mit radiologischen PACS-Systemen (PACS-Picture Archiving and Communication System = Bildarchivierungs- und Kommunikationssystem) im interventionellen bzw. sterilen Bereich für das interaktive Betrachten, Drehen, Vergrößern und Anordnen von klinischen Bildern, z. B. CT-Bildern, Röntgenbildern, MRT-Bildern, wurde in J. Wachs; H. Stern, Y. Edan, M. Gillam, C. Feied, M. Smith, J. Handler: Gestix: A Cpmputing in Industrial Applications. Springer Berlin / Heidelberg ISSN 1615-3871 Vol. 39/2007 Soft Computing in Industrial Applications pp. 30-39; JP. Wachs, HI. Stern. Y. Edan, M. Gillam, J. Handler, C. Feed, M. Smith: A Gesture-based Tool for Sterile Browsing of Radiology Images. J. Am. Med. Inform. Assoc., 2008 May-Jun; 15(3): 321-323 präsentiert.

Die vorgenannten Lösungen nutzen im Wesentlichen TOF-Kameras, Infrarotsysteme oder Stereokameras, die wesentlich teurer als einfache monokulare Kameras, z. B. ConsumerKameras, sind, die lediglich ein zweidimensionales Bild (2D-Bild) liefern.

In der Offenlegungsschrift DE 102 33 233 A1 "Erkennung von Bewegungen (dynamische Gesten) zur berührungslosen und tonlosen Interaktion mit technischen Systemen "wird ein Ansatz für die Erkennung dynamischer Gesten" vorgestellt. Die Erfindung macht sich die Eigenschaft der Geste des Körperteils zu nutze, das sie zwischen einem ersten im Wesentlichen unbewegten und einem zweiten, im Wesentlichen unbewegten Zustand abläuft bzw. stattfindet, siehe Anspruch 1 der Offenlegungsschrift. Dieser Bewegungsabschnitt zwischen den zwei statischen Abschnitten ist die Gestendauer oder der Zeitabschnitt, innerhalb dessen der Bedeutungsgehalt der Geste vermittelt wird. Es ist deshalb möglich, die Gestenerkennung über die Erfassung von Bewegung beginnen zu lassen und über eine Erfassung des Endes der Bewegung enden zu lassen. Dabei wird ein Schwellenwert zur Bewegungserkennung verwendet, um Beginn und Ende der Gestendauer festzulegen bzw. automatisiert erkennen zu können. In der Offenlegungsschrift wird daher das Ziel der Erkennung von abgegrenzten Gesten zur Steuerung von Maschinen in Form einer Art Zeichensprache, z. B. "auf/zu" oder "hoch/runter", oder auch komplexer Zahlen zu ermöglichen.

Bei der Erkennung beweglicher Objekte stellt sich insbesondere bei der Verwendung von zweidimensionalen Bildern das Problem, dass das Objekt sich aus der Bildebene herausdreht oder sich dessen Form anderweitig ändert und nicht mehr als solches erkannt wird.

Die US2005/0271279A1 bezieht sich auf eine zeichenbasierte Mensch-Maschine-Interaktion unter Verwendung eines Computers. Dabei wird zunächst ein digitales Bild eines Zielobjekts erfasst, wobei das digitale Bild Tiefendaten, die den Bildpixeln zugeordnet sind, aufweist. Die Tiefendaten entsprechen dabei dem Abstand zu der Kamera. Daraufhin wird eine Position einer Hand des Zielobjekts innerhalb der Pixel des Bildes basierend auf den Tiefendaten, die den Pixeln zugeordnet sind, bestimmt. Ferner wird versucht, eine Kandidatenform der Hand des erfassten Zielobjekts in dem digitalen Bild mit einer gespeicherten Formabbildung aus einer Mehrzahl von Formabbildungen in Übereinstimmung zu bringen, indem eines oder mehrere der Mehrzahl von gespeicherten Formabbildungen mit der Kandidatenform verglichen wird. Beim Inübereinstimmungbringen der Kandidatenform der Hand wird nun insbesondere zunächst ein Rand der Hand in der vorbestimmten Position des Bildes bestimmt. Daraufhin wird eine Pixelabstandstransformierte auf das Bild hinsichtlich des Rands der Hand angewendet, um ein Kandidatenrandbild zusammenzusetzen. Dabei umfasst das eine oder die mehreren der Mehrzahl von gespeicherten Formabbildungen Randpixelabstandstransformierte der Abbildungen für einem Vergleich mit der Kandidatenform basierend auf einer Projektion des Kandidatenformbildes über die gespeicherten Formabbildungen, um einen Ähnlichkeitswert basierend auf der Korrelation zwischen dem Kandidatenrandbild und den Abstandstransformierten der gespeicherten Bilder zu bestimmen.

Die US2004/0189720A1 bezieht sich auf eine Architektur zum Steuern eines Computers unter Verwendung von Handgesten. Dabei werden Videokameras verwendet, um ein Bereichsvolumen zu betrachten. Dieses Bereichsvolumen befindet sich im Allgemeinen vor der Videoanzeige, an der die Videokameras angeordnet sind, und wird als ein aktives Volumen bezeichnet, in dem Gestenbefehle durch die Bedienperson durchgeführt und durch das System erkannt werden können. Sich in Bewegung befindliche Objekte werden durch einen Vergleich entsprechender Teilbereiche (Videoteilsätze des gesamten Videobildes) des Videos von aufeinanderfolgenden Videobildern erfasst. Durch Analysieren und Vergleichen der entsprechenden Videoteilbereiche von aufeinanderfolgenden Bildern werden sich in Bewegung befindliche Objekte erfasst und nachverfolgt.

Die US2007/0125633A1 bezieht sich auf ein Verfahren und ein System zum Aktivieren einer berührungslosen Steuerung. Dabei wird zunächst eine Bewegung eines Fingers in einem berührungslosen Erfassungsfeld detektiert, wobei eine Aktivierungsvorgabe ansprechend auf die Fingerbewegung identifiziert wird. Daraufhin wird eine berührungslose Steuerung eines Objekts ansprechend auf die Aktivierungsvorgabe aktiviert. Ferner kann eine Fokussierung des berührungslosen Erfassungsfelds vorgesehen werden, um einen berührungslosen Projektionsraum zu erzeugen. So kann eine Aktivierungsvorgabe durch eine Positionierung eines Fingers innerhalb eines vorgegebenen Bereichs des berührungslosen Projektionsraums für eine vorbestimmte Zeitdauer lang erhalten werden, um eine Cursornavigation und Steuerung gemäß berührungsloser Fingerbewegungen vorzusehen.

Die EP 1 553 516 B1 bezieht sich auf eine Fußgängererfassungsvorrichtung zur Erkennung eines Fußgängers aus einem Eingabebild, das von einem Bildaufnahmemittel aufgenommen wird, basierend auf einer Musterentsprechung des Eingabebildes und von Modellbildern des Fußgängers.

### Zusammenfassung

Die Aufgabe wird durch die in den unabhängigen Patentansprüche 1 und 11 beschriebenen Maßnahmen gelöst. Vorteilhafte Weiterbildungen sind in den Patentansprüchen angegeben.

Die vorliegenden Erfindung betrifft einen Programm mit einem Programmcode zur Durchführung eines Verfahrens, wenn das Programm auf einem Rechner oder Prozessor abläuft, zum Erkennen eines Objektes in einem aktuellen Bild einer Folge von Bildern, wobei das Objekt zumindest in einem Bildausschnitt eines früheren Bildes der Folge von Bildern erkannt wurde, mit den folgenden Schritten: Auswählen eines Bildausschnitts des aktuellen Bildes; Bestimmen eines Ähnlichkeitsgrades zwischen dem Bildausschnitt des aktuellen Bildes und dem Bildausschnitt des früheren Bildes, in dem das Objekt erkannt wurde, mittels eines Vergleichs derselben; und Erkennen des Objektes in dem Bildausschnitt des aktuellen Bildes, wenn der Ähnlichkeitsgrad eine vorgegebene Ähnlichkeitsbedingung erfüllt.

Ausführungsbeispiele der vorliegenden Erfindung erweitern somit den Suchraum über, z. B. in einer Trainingsphase er-zeugte, Modelle des Objektes hinaus, die in herkömmlichen Systemen verwendet werden, um in der Betriebsphase erzeugte Bildausschnitte, in denen das Objekt erkannt wurde, die daher auch als "positiv klassifizierte Bildausschnitte" bezeichnet werden und als "Vorlagen" für die Erkennung des Objektes verwendet werden können.

Die vorliegende Erfindung basiert auf der Erkenntnis, dass Bildausschnitte, in denen das Objekt erkannt wurde, Abwandlungen des Objektes in Bezug auf dessen Modell darstellen, die auch verwendet werden können, um das Objekt zu erkennen, und so die Erkennungsrate zu erhöhen. Diese positiv klassifizierten Bildausschnitte können daher auch als Hilfsmodelle, Zwischenmodelle oder als Nachverfolgungsmodelle bzw. Tracking-Modelle, oder wie zuvor erwähnt, als Vorlagen bezeichnet werden.

Ausführungsbeispiele der vorliegenden Erfindung haben ferner den Vorteil, dass in einer der Betriebsphase vorgelagerten Trainingsphase, in der die den Objekten zugeordneten Modelle erzeugt werden, nur eine geringe Anzahl von Modellen, beispielsweise nur ein Modell pro Objekt, erzeugt werden, und somit der Trainingsaufwand gering ist, gleichzeitig, jedoch die Erkennungsrate erhöht werden kann.

Dies gilt für jedwede Änderung, Bewegung und/oder Drehung, unabhängig von der Art der Änderung und der Richtung der Bewegung und/oder Drehung, insbesondere jedoch für Drehungen des Objektes aus der Bildebene heraus und wieder zurück.

Ausführungsbeispiele des vorliegenden Verfahrens ermöglichen das Erkennen beliebiger Objekte, und können beispielsweise für die Erkennung von Körperteilen, z. B. einer Hand oder eines Fußes, eingesetzt werden, oder zur Erkennung von Gesten, z. B. einer offenen Hand als erste Geste und einer geballten Faust als zweiter Geste.

Bei Ausführungsbeispielen der vorliegenden Erfindung kann die Erkennung in zwei Stufen oder Phasen durchgeführt werden. In einer ersten Stufe, die auch als Detektionsstufe bezeichnen kann, werden die Bildausschnitte des aktuellen zu klassifizierenden Bildes nur mit den in der Trainingsphase erzeugten Modellen verglichen, und nur, wenn in dieser ersten Stufe in dem aktuellen zu klassifizierenden Bild kein Objekt erkannt wird, wird die zweite Stufe, die auch als Nachverfolgungsstufe oder "Tracking-Stufe" bezeichnet werden kann, durchgeführt. Dabei werden in der Nachverfolgungsstufe die Bildausschnitte dieses aktuellen zu klassifizierenden Bildes mit den positiv klassifizierten Bildausschnitten verglichen, um zu prüfen, ob anhand dieser doch noch ein Objekt in dem aktuellen zu klassifizierenden Bild erkannt werden kann. Dieser zweistufige Ansatz hat den Vorteil, dass bei einem Übergang von einer ersten Geste in eine zweite Geste, bei dem sich die aktuelle Form der ersten Geste immer mehr von der idealen Form der ersten Geste, charakterisiert durch das Modell der ersten Geste, entfernt, zunächst immer geprüft wird, ob nicht schon die zweite Geste erkannt wird, bevor auf die positiv klassifizierten Bildausschnitte der ersten Geste zurückgegriffen wird, um die Erkennung durchzuführen und die Bewegung und/oder Änderung der Geste nach zu verfolgen.

In weiteren Ausführungsbeispielen des Verfahrens wird ein Bildausschnitt, indem das Objekt erkannt wurde, unabhängig davon, ob das Objekt mittels eines Modells oder eines zuvor positiv klassifizierten Bildausschnitts in dem aktuellen Bildausschnitt erkannt wurde, in einem Zwischenspeicher zwischengespeichert. Dieser zwischengespeicherte positiv klassifizierte Bildausschnitt wird dann in einem Bildausschnittsspeicher gespeichert, wenn in keinem der Bildausschnitte eines nächsten Bildes das Objekt mittels des Modells erkannt wird. Die mit dem positiv klassifizierten Bildausschnitt gespeicherte Positionsinformation desselben in dem vorhergehenden Bild wird verwendet, um den Suchbereich innerhalb des nächsten bzw. nächsten aktuellen Bildes auf einen Umgebungsbereich des positiv klassifizierten Bildausschnitts zu begrenzen. Dies ermöglicht ein Beschleunigen des Erkennungsverfahrens.

Bei weiteren Ausführungsbeispielen der vorliegenden Erfindung wird der Bildausschnittsspeicher zu Beginn der Betriebsphase gelöscht, und dann sukzessive mit positiv klassifizierten Bildausschnitten gefüllt, wenn zuvor das Objekt zumindest einmal mittels eines Vergleichs mit dem Modell des Objektes erkannt wurde. Dies erhöht die Erkennungszuverlässigkeit bzw. Zuverlässigkeit der Unterscheidung (Klassifikation) zwischen Erkennen des Objektes und NichtErkennen des Objektes, da erst dann auf positiv klassifizierte Bildausschnitte für die Erkennung des Objektes zurückgegriffen wird, wenn das Objekt zuvor anhand des "idealen" Modells erkannt wurde. In diesem Sinne können bestimmte Ausführungsbeispiele auch derart umschrieben werden, dass anhand der Modelle des Objektes eine Art Ersterkennung erfolgt, während die positiv klassifizierten Bildausschnitte lediglich eine bessere Nachverfolgung dieses zuvor anhand des Modells erkannten Objektes ermöglichen.

In weiteren Ausführungsbeispielen, in denen mehrere positiv klassifizierte Bildausschnitte, also Bildausschnitte, in denen das Objekt erkannt wurde, in dem Bildausschnittsspeicher gespeichert sind, wird der Vergleich des aktuellen, zu klassifizierenden Bildausschnitts mit einem der positiv klassifizierten Bildausschnitte mit dem ältesten gespeicherten und positiv klassifizierten Bildausschnitt begonnen, und wenn das Objekt mittels dieses ältesten positiv klassifizierten Bildausschnitts nicht in dem aktuellen zu klassifizierenden Bildausschnitt erkannt wird, mit dem nächst jüngeren gespeicherten und positiv klassifizierten Bildausschnitt fortgeführt. Führt auch ein Vergleich des zu klassifizierenden Bildausschnitts mit dem nächst jüngeren positiv klassifizierten Bildausschnitt nicht zu einem Erkennen des Objektes in dem zu klassifizierenden Bildausschnitt, wird der Vergleich mit dem wiederum nächst jüngeren gespeicherten positiv klassifizierten Bildausschnitt fortgeführt, usw. Bei Drehbewegungen des Objektes aus der Bildebene, wird der in den Bildausschnitten enthaltene Umriss bzw. die zweidimensionale Form des Objektes dem ursprünglichen Modell mit wachsendem Winkel immer unähnlicher. Ausführungsbeispiele des vorliegenden Verfahrens, in denen zunächst mit den älteren positiv klassifizierten Bildausschnitten, die dem ursprünglichen Modell typischerweise ähnlicher sind als spätere Bildausschnitte, begonnen wird, ermöglichen somit eine Erhöhung der Erkennungszuverlässigkeit.

In weiteren Ausführungsbeispielen des vorliegenden Verfahrens, werden alle jüngeren in dem Bildausschnittsspeicher gespeicherten und positiv klassifizierten Bildausschnitte gelöscht, wenn ein in dem Bildausschnittsspeicher gespeicherter und positiv klassifizierter Bildausschnitt zu einer Erkennung des Objektes in dem zu klassifizierenden Bildausschnitt geführt hat. Dies reduziert den Speicheraufwand für das vorliegende Verfahren und verhindert zu große Abweichungen von dem ursprünglichen Modell.

Ausführungsbeispiele des vorliegenden Verfahrens können auch implementiert werden, um zwei oder mehr verschiedene Objekte mittels Bildausschnitten zu erkennen, in denen diese Objekte zuvor erkannt wurden. Dabei können auch mehrere Objekte gleichzeitig in einem Bild erkannt werden.

Weitere Ausführungsbeispiele des Verfahrens ermöglichen ferner ein Erfassen der Bewegung des Objektes, um beispielsweise einen Bildschirmzeiger entsprechend der Bewegung des Objektes zu steuern.

Weitere Ausführungsbeispiele des Verfahrens ermöglichen eine berührungslose Gestik-Steuerung eines Bildschirmzeigers oder das Erzeugen einer Markierung in einer Bildschirmdarstellung mittels eines berührungslos-gestikgesteuerten Bildschirmzeigers.

### Kurze Beschreibung der Figuren

Ausführungsbeispiele der vorliegenden Erfindung werden nachfolgend unter Bezugnahme auf beiliegenden Zeichnungen näher erläutert.
- Fig. 1: zeigt ein System zum Erkennen eines Objektes, hier einer Geste in Form einer offenen Hand, mit einer Kamera, einem Computer und einem Bildschirm.
- Fig. 2: zeigt ein von der Kamera des Ausführungsbeispiels des Systems gemäß Fig. 1 erzeugtes Bild mit einem Bildausschnitt, indem die Geste in Form der offenen Hand erkannt wurde.
- Fig. 3A: zeigt ein beispielhaftes Modell, das einer ersten Geste in Form einer offenen Hand zugeordnet ist und für die Erkennung der ersten Geste verwendet wird.
- Fig. 3B: zeigt ein beispielhaftes Modell einer zweiten Geste in Form einer geballten Faust, das von einem Ausführungsbeispiel des Systems für die Erkennung der zweiten Geste verwendet wird.
- Fig. 4A: zeigt eine beispielhafte schematische Darstellung, für ein Ausführungsbeispiel, wie ein Bild mittels Bildausschnitten auf die Existenz der Gesten untersucht wird.
- Fig. 4B: zeigt eine schematische Darstellung eines weiteren Ausführungsbeispiels, bei dem der Suchbereich gegenüber dem Ausführungsbeispiel gemäß Fig. 4A auf einen Teilbereich des aktuellen Bildes eingeschränkt wird.
- Fig. 5A: zeigt eine Draufsicht eines Systems analog zu Fig. 1, bei dem die offene Hand in der Bildebene der Kamera liegt.
- Fig. 5B: zeigt einen beispielhaften Bildausschnitt gemäß Fig. 5A.
- Fig. 6A: zeigt eine Draufsicht eines Ausführungsbeispiels des Systems gemäß Fig. 1, bei dem die offene Hand sich aus der Bildebene der Kamera gedreht hat.
- Fig. 6B: zeigt einen beispielhaften Bildausschnitt gemäß Fig. 6A mit einer schematische Darstellung der gedrehten offenen Hand.
- Fig. 7: zeigt ein Flussdiagramm eines Ausführungsbeispiels eines Verfahrens zum Erkennen einer Geste.
- Fig. 8: zeigt ein Flussdiagramm eines Ausführungsbeispiels eines Verfahrens zum Erzeugen einer Markierung in einer Bildschirmdarstellung mittels eines berührungslosen gestik-gesteuerten Bildschirmzeigers.

Dabei werden in der vorliegenden Anmeldung für Objekte und Funktionseinheiten, die gleiche oder ähnliche funktionelle Eigenschaften aufweisen, die gleichen Bezugszeichen verwendet.

### Detaillierte Beschreibung

Im folgenden werden Bildausschnitte, in denen ein Objekt erkannt wurde, als positiv klassifizierte Bildausschnitte bezeichnet, Bilder in denen ein Objekt erkannt wurde, als positiv klassifizierte Bilder bezeichnet, und Bilder bzw. Bildausschnitte, in denen kein Objekt erkannt wurde als negativ klassifizierte Bilder bzw. Bildausschnitte bezeichnet.

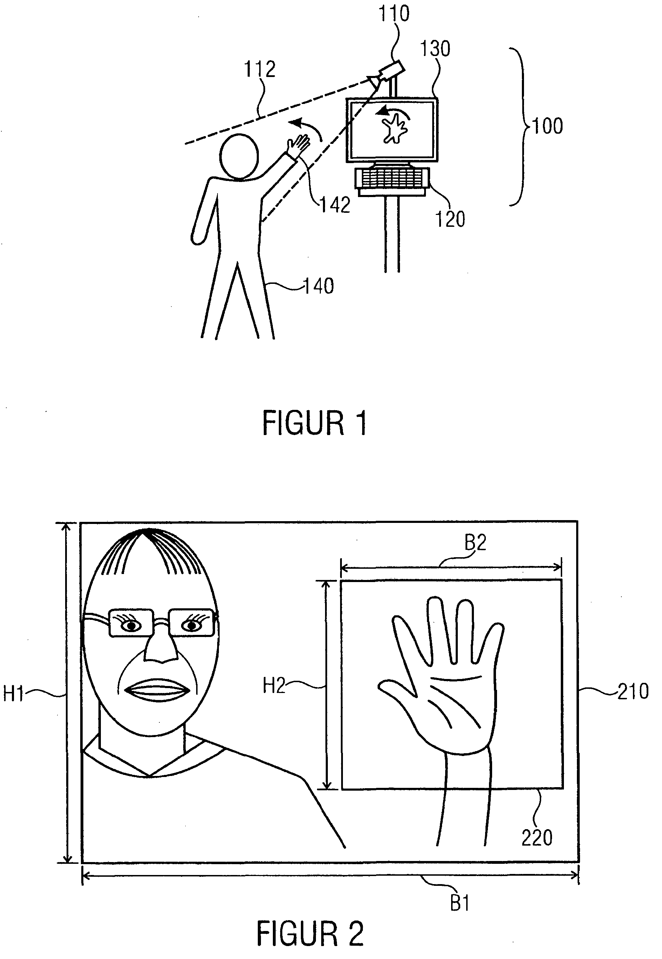

Fig. 1 zeigt ein Ausführungsbeispiel eines Systems zum berührungslosen Erkennen einer Geste mit einer Kamera 110, einer Steuereinheit 120, z.B. einem Computer 120, und einem Bildschirm 130. Die Kamera 110 ist eine monokolare Kamera, z. B. eine Webcam, die eine Folge von zweidimensionalen Bildern erzeugt, und über eine Signalverbindung an den Computer 120 zur weiteren Verarbeitung sendet.

Der Computer 120 ist ausgebildet, eines der erfindungsgemäßen Verfahren auszuführen, z. B. das Verfahren zum Erkennen der Geste auszuführen, beispielsweise die Bilder der Kamera auf die Existenz einer oder mehrerer Gesten, oder allgemein von Objekten, zu untersuchen.

Abhängig von den Ausführungsbeispielen kann der Computer 120 ausgebildet sein, abhängig von dem Erkennen oder Nichterkennen der Geste die Bildschirmanzeige auf dem Bildschirm 130 zu ändern oder bestimmte Operationen durchzuführen.

Fig. 1 zeigt ferner eine Person 140, die sich zumindest teilweise in dem Arbeitsbereich 112 der Kamera 110 befindet, und in diesem Arbeitsbereich 112 die rechte Hand 142 bewegt (siehe Pfeil).

Fig. 2 zeigt ein beispielhaftes Bild 210, das von der Kamera 110 aus Fig. 1 erzeugt wurde, indem ein Teil der Person 140, ähnlich wie in Fig. 1 dargestellt, abgebildet ist, wobei in Fig. 2 statt der rechten Hand, wie in Fig. 1, die linke Hand dargestellt ist. Fig. 2 zeigt also einen Bildausschnitt 220, indem die linke offene Hand der Person 140 abgebildet ist und erkannt wurde.

Das Bild 210 hat eine Breite B1 und eine Höhe H1, der Bildausschnitt 220 eine Breite B2 und eine Höhe H2. Dabei können die Höhen H1, H2 und die Breiten B1 und B2 in vielfachen von Bildelementen, z. B. Pixel oder Pixelblöcken, angegeben werden.

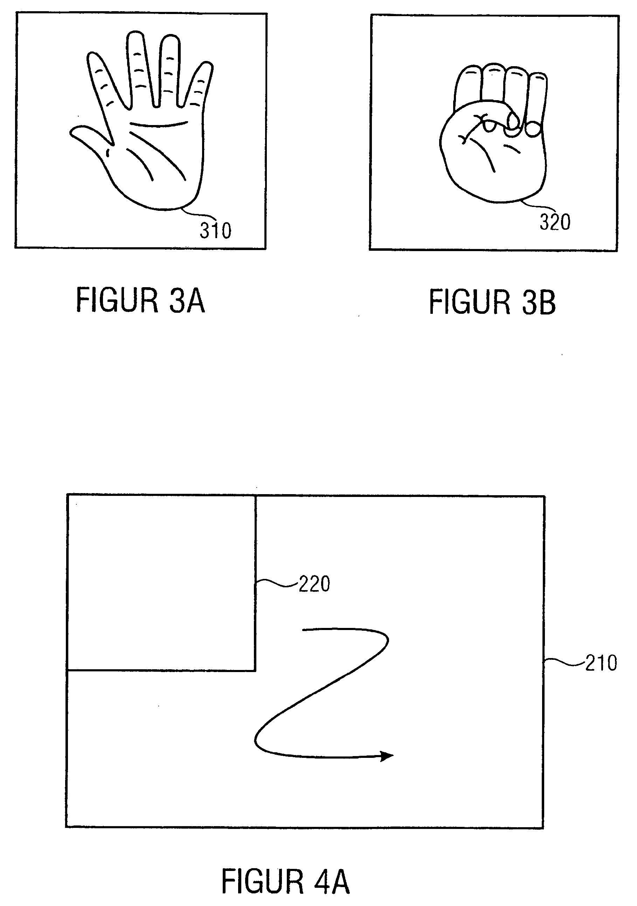

Die Erkennung kann auf Originalbildern und entsprechend O-riginalbildausschnitten oder auf vorverarbeiteten Darstellungen der Originalbilder oder entsprechend Originalbildausschnitten basieren. Dabei kann bei dem "Vorvorarbeiten" auch von einem "Aufbereiten" der Originalbilder oder Originalbildausschnitte gesprochen werden. Für die Erkennung der Gesten können verschiedenste Vorverarbeitungsverfahren oder Merkmalsextraktionsverfahren verwendet werden, um das gesamte Bild 210 oder die einzelnen Bildausschnitte 220 jeweils für sich vor zu verarbeiten, um dann beispielsweise die vorverarbeitete Darstellung des Bildausschnittes mit einem Modell einer Geste zu vergleichen. Die Vorverarbeitung kann beispielsweise ein flächiges Tiefpassfiltern umfassen, um Rauschen zu unterdrücken, und/oder ein flächiges Hochpassfiltern, z. B. mittels Sobel-Operatoren umfassen, um Konturen stärker hervorzuheben. Der Vergleich kann beispielsweise Farbinformationen und/oder Helligkeitswerte von Bildelementen und/oder Farb- und/oder Helligkeitsdifferenzwerte zu benachbarten Bildelementen umfassen, und/oder auf Känteninformationen, wie beispielsweise Kantenlänge und Kantenstärke beruhen. Im Folgenden werden die Modelle, die das Objekt entweder als ideales Original oder in der vorverarbeiteten Darstellung repräsentieren, zum leichteren Verständnis ähnlich zu den Bildausschnitten dargestellt, siehe Fig. 3A und 3B.

Fig. 3A zeigt ein Modell einer ersten Geste 310 in Form einer offenen linken Hand mit gespreizten Fingern, während Fig. 3B ein Modell einer zweiten Geste 320 in Form einer zur Faust geballten linken Hand zeigt.

In den Ausführungsbeispielen, in denen zunächst das gesamte Bild 210 vorverarbeitet wird, wird die vorverarbeitete Darstellung des jeweiligen Bildausschnitts des Gesamtbildes dadurch erzeugt, dass die diesen Bildausschnitt zugeordneten Informationen ausgewählt werden. Für eine Darstellung mittels Helligkeitswerten oder Grauwerten, beispielsweise die Helligkeits- oder Grauwerte der Bildelemente, die in dem Bildausschnitt 220 liegen. Bei kantenbasierten Verfahren, entsprechend die Kantenrichtungen und/oder Kantenstärken der Bildelemente, die in dem Bildausschnitt 220 liegen.

Fig. 4A zeigt ein Beispiel eines bildausschnittsweisen Absuchens des Bildes 210 auf die Existenz einer Geste. Dabei zeigt Fig. 4A ein Ausführungsbeispiel, bei dem mit dem Bildausschnitt in Bezug auf Fig. 4A links oben des Bildes 210 zeilenweise durch Verschieben der Bildausschnitte 220 in horizontaler und vertikaler Richtung abgesucht wird (siehe schematischer Pfeil) in Fig. 4A.

Das Größenverhältnis der Bildausschnitte 220 im Vergleich zu dem Bild 210 ist dabei in den vorliegenden Figuren nicht notwendigerweise maßstabsgetreu, sondern schematisch gezeigt. Dabei hängt die Größe des Bildausschnitts 220 von der absoluten Größe des Objektes, z. B. der offenen Hand, des Abstands der Hand von der Kamera sowie der absoluten Größe des Bildes in Abhängigkeit des Abstands zur Kamera ab. Dabei wird die Größe des Bildausschnitts 220 zumindest so groß gewählt, dass die flächenmäßig größte Geste bzw. das flächenmäßig größte Objekt vollständig in einem Bildausschnitt erfasst werden kann.

In weiteren Ausführungsbeispielen kann die Größe der Modelle geändert werden, um Größenvariationen des Objektes, beispielsweise bedingt durch eine Variation des Abstands des Objektes zur Kamera, auszugleichen, um somit die Erkennungszuverlässigkeit zu erhöhen. In anderen Ausführungsbeispielen wird die Größe des Modells beibehalten, und stattdessen die Größe des Bildes skaliert.

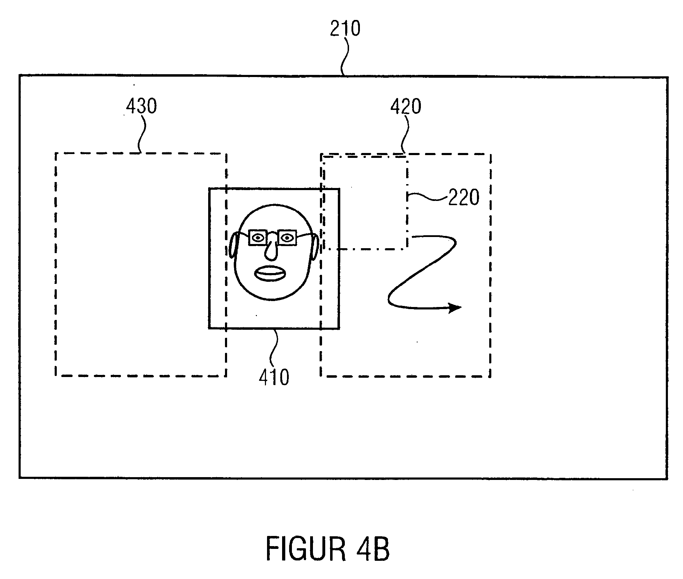

Fig. 4B zeigt ein weiteres Ausführungsbeispiel für ein bildausschnittsweises Absuchen des Bildes 210 auf die Existenz einer Geste. Dabei wurde in dem Ausführungsbeispiel gemäß Fig. 4B in einem Bereich 410 des Bildes ein Gesicht zuvor erkannt, und abhängig von der Position des Gesichts ein erster Teilbereich 420 und ein zweiter Teilbereich 430 in dem Bild 210 definiert (siehe gestrichelte Linie), und die Suche nach der Geste, z.B. der Handgeste, auf den ersten Teilbereich 420 und den zweiten Teilbereich 430 eingeschränkt. In anderen Worten, die Bildausschnitte 220 (siehe strichpunktierte Linie), die für den Vergleich mit dem Modell der Geste verwendet werden, werden nicht wie in Fig. 4A dargestellt aus dem gesamten Bild 210 sondern aus dem ersten Teilbereich 420 und dem zweiten Teilbereich 430 ausgewählt.

Dieser Ansatz basiert auf der Erkenntnis, dass beispielsweise eine Handgeste in einem bestimmten Bereich in der Nähe des Gesichts erwartet werden kann, z.B. links oder rechts von dem Gesicht und in einer bestimmten Höhe in Bezug auf die Höhe des Gesichts in dem Bild.

Der Vorteil dieses Ausführungsbeispiels liegt darin, dass der für die Erkennung zu untersuchende Bereich des Bildes 210 eingeschränkt werden kann, und somit die Anzahl der mit dem Modell zu vergleichenden Bildausschnitte 220 gegenüber einer Vollbildsuche, wie sie in Fig. 4A dargestellt ist, reduziert werden kann. Innerhalb der Teilbereiche 420, 430 können diese wiederum bildausschnittsweise (siehe Pfeil) ähnlich wie in dem Vollbild, durch Verschieben der Bildausschnitte 220 in horizontaler und vertikaler Richtung oder in anderer Reihenfolge abgesucht werden.

In weiteren Ausführungsbeispielen wird beispielsweise nur einer der zwei Teilbereiche, z.B. der erste Teilbereich 420 für das erfindungsgemäße Erkennungsverfahren verwendet. Dies kann beispielsweise dann vorteilhaft eingesetzt werden, wenn dem System bekannt ist, dass die Person 140 die entsprechenden Handgesten nur mit der linken Hand erzeugt, s. auch Fig. 2. In anderen Ausführungsbeispielen, bei denen bekannt ist, dass die Person nur Gesten mit der rechten Hand erzeugt, wird beispielsweise nur der zweite Teilbereich 430 für das bildauschnittsweise Erkennen verwendet.

Die Teilbereiche 420, 430 sind nur beispielhaft, es können in anderen Ausführungsbeispielen beliebige andere Teilbereiche innerhalb des Bildes 210 gewählt werden, die abhängig von der räumlichen Beziehung zwischen einem ersten Objekt, z.B. der zuvor genannten Handgeste, und einem zweiten Objekt, z.B. dem zuvor genannten Gesicht, definiert werden. Ferner können auch andere Objekte, z.B. auch andere Körperteile als erstes und zweites Objekt verwendet werden.

Der oder die Teilbereiche 420, 430 können beispielsweisekleiner als das Gesamtbild 210 und größer als die Bildausschnitte 220 sein, z.B. maximal nur halb so groß wie das Gesamtbild 210 und mindestens sechs mal so groß wie ein Bildausschnitt 220.

Dabei kann für die Untersuchung des Bildes 210, ob das aktuelle Bild 210 das zweite Objekt, z.B. das Gesicht 410, aufweist, ein Verfahren gemäß der vorliegenden Erfindung oder ähnlich der ersten Stufe derartiger Verfahren verwendet werden, z.B. die Untersuchung mittels einem bildausschnittsweisen Vergleichen des Bildes mit einem Modell des zweiten Objektes erfolgen, oder durch andere Untersuchungs- oder Erkennungsverfahren. Dabei können ferner die Bildausschnitte, in denen das zweite Objekt 410 gesucht wird, so groß wie die Bildausschnitte für das erste Objekt, z.B. die Handgeste, sein, oder größer sein.

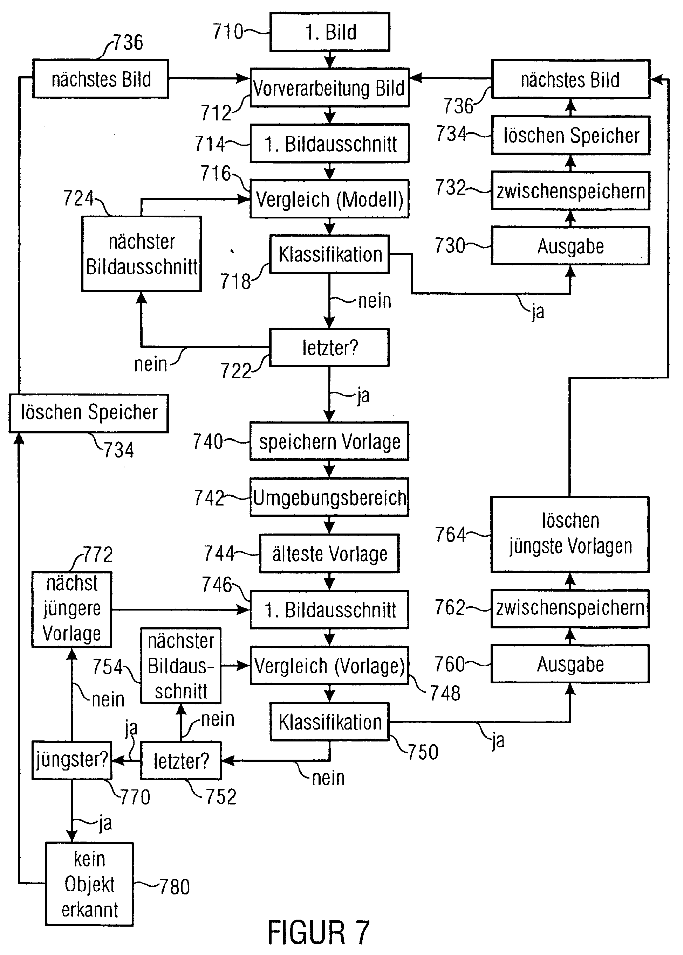

Die anhand der Fig. 4B beschriebenen Ausführungsbeispiele sind optional und können beispielsweise zwischen dem Schritt 712 "Vorverarbeitung Bild" und Schritt 714 "Erster Bildausschnitt" des Verfahrens gemäß Fig. 7, das später erläutert wird, durchgeführt werden.

Die Ausführungsbeispiele gemäß Fig. 4B sind insbesondere dann vorteilhaft, wenn das zweite Objekt, z.B. das Gesicht, schneller, z.B. mittels einer geringeren Anzahl von Bildausschnitten oder anderer Verfahren und/oder mit höherer Zuverlässigkeit in dem Bild 210 erkannt werden kann, als das erste Objekt, z.B. die Handgeste.

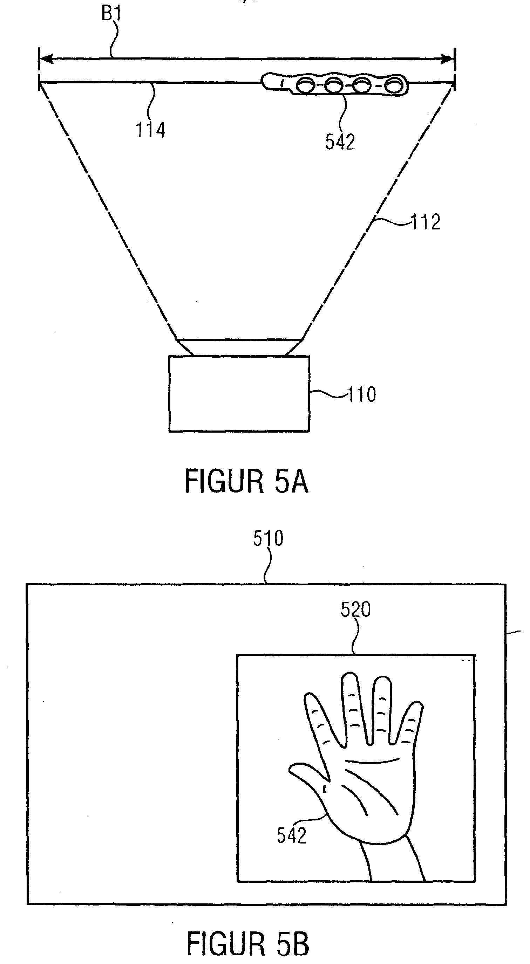

Fig. 5A zeigt eine beispielhafte Draufsicht auf eine Kamera 110 und eine beispielhafte Hand 542, die in einer Bildebene 114 der Kamera 110 liegt, und Fig. 5B zeigt einen Bildausschnitt 520 in dem Bild 510, indem die Hand 542 vollständig liegt. Aus Übersichtlichkeitsgründen wird in Fig. 5B nur der Bildausschnitt 520 gezeigt, und die in dem Bildausschnitt umgebenden Bildbereiche, wie beispielsweise in Fig. 2 dargestellt, nicht dargestellt.

Eine derartige Ausrichtung der Hand 542 parallel bzw. in der Bildebene 114 oder im Wesentlichen parallel zu oder in der Bildebene 114 der Kamera 110, ist für die Erkennung mittels des zweidimensionalen Modells 310 der offenen Hand optimal bzw. ermöglicht eine hohe Erkennungszuverlässigkeit.

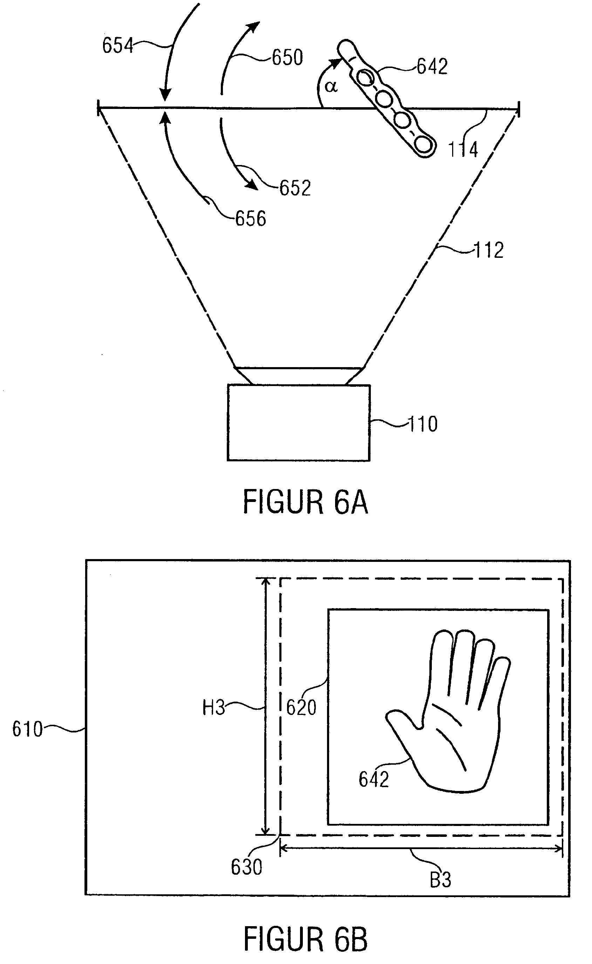

Fig. 6A zeigt eine Draufsicht ähnlich zu Fig. 5A, wobei die offene Hand aus Fig. 5A in Fig. 6A in einem aus der Bildebene 114 herausgedrehten Zustand 642 dargestellt ist und der Drehwinkel gegenüber der Bildebene 114 mit α bezeichnet ist.

Fig. 6B zeigt die gedrehte Hand 642 in dem Bildausschnitt 620 des Bildes 610. Durch die Drehbewegung bzw. den Drehwinkel α der offenen Hand 642 wird die Erkennung der Geste (offene Hand) erschwert. Mit zunehmenden Winkel α, beispielsweise in einem Bereich von 0° bis 90°, nimmt die Ähnlichkeit der offenen Hand 642 mit dem Modell 310 ab, bis ab einem gewissen Winkel α die Ähnlichkeit so gering ist, dass das System die offene Hand 642 nicht mehr als solche erkennt, obwohl sie weiterhin, auch wenn aus der Bildebene 114 gedreht, vorliegt.

In Ausführungsbeispielen, in denen eine Person 140 eine oder mehrere Gesten verwendet, um beispielsweise das System 100 gestik-basiert zu steuern, kann es beispielsweise bei translatorischen Bewegungen der Hand innerhalb der Bildebene ungewollt auch zu Rotationsbewegungen bzw. Drehbewegungen der Hand aus der Bildfläche, siehe Pfeile 650 und 652 sowie zu entsprechenden Gegenbewegungen bzw. Drehungen zurück in die Bildebene 654 und 656 kommen. Diese Drehbewegungen sind bis zu einem gewissen Winkel α unkritisch, da die Geste dennoch anhand des Modells 310 erkannt werden kann, geht die Drehbewegung jedoch über diesen Grenzwinkel hinaus, erkennt das System 100 die Geste 310 nicht mehr und die Person 140 verliert die Kontrolle über das System 100.

Fig. 7 zeigt ein Flussdiagramm eines Ausführungsbeispiels eines Verfahrens zum Erkennen einer Geste, das eine Erhöhung der Erkennungssicherheit der Gesten ermöglicht, und somit auch eine zuverlässigere Steuerung des Systems durch die Peson 140.

Bei dem Verfahren werden zwei Phasen unterschieden, zum einen die Trainingsphase, in der beispielsweise die Modelle 310 und 320 erzeugt werden, beispielsweise durch bekannte Trainingsverfahren, und die eigentliche Betriebsphase, in dem eine oder mehrere Gesten in Bildern, beispielsweise mittels der zuvor in der Trainingsphase erzeugten Modelle 310, 320, erkannt werden sollen.

Im Folgenden wird ein Ausführungsbeispiel beschrieben, bei dem nur eine Geste, z. B. die offene Hand 310 gemäß Fig. 3A, oder nur ein Objekt in den Bildern gesucht wird. In anderen Worten, ein Ergebnis des Erkennungsverfahrens ist, ob diese Geste in einem Bild erkannt wurde, oder nicht.

Fig. 7 zeigt ein Flussdiagramm der Betriebsphase eines Ausführungsbeispiels des Verfahrens. Dabei wird in Schritt 710 ein erstes Bild einer Folge von Bildern bereitgestellt und in Schritt 712 vorverarbeitet, um eine vorverarbeitete Darstellung des ersten Bildes zu erzeugen. Die vorverarbeitete Darstellung kann auch als vorverarbeitete Fassung oder Version des Bildes oder als Merkmalsdarstellung des Bildes bezeichnet werden.

In Schritt 714 wird gemäß einer vorgegebenen Reihenfolge zur Auswahl einzelner Bildausschnitte in dem Bild, ein erster Bildausschnitt des ersten Bildes ausgewählt. Da in dem vorliegenden Ausführungsbeispiel das Bild zuvor vorverarbeitet wurde, wird nicht der Bildausschnitt mit den ursprünglichen Bildinformationen ausgewählt, sondern der Bildausschnitt mit den vorverarbeiteten Bildinformationen, oder in anderen Worten, eine vorverarbeitete Darstellung des ersten Bildausschnitts ausgewählt und bereitgestellt.

Da typischerweise die Bildinformationen oder Bilddaten immer in der einen oder anderen Weise vorverarbeitet werden, um eine Erkennung von Gesten oder Objekten zu erleichtern, wird im Folgenden auch von "Bildern" und "Bildausschnitten" gesprochen, wenn es sich um eine vorverarbeitete Darstellung des Bildes oder eines Bildausschnittes des vorverarbeiteten Bildes handelt, um die Beschreibung lesbarer zu gestalten. Es sei jedoch darauf hingewiesen, dass in anderen Ausführungsbeispielen Originalbilder und entsprechend Originalbildausschnitte, die nicht vorverarbeitet wurden, verwendet werden können, um in analoger Weise eine Erkennung des Objektes durchzuführen.

Im Ausführungsbeispiel gemäß Fig. 7 werden die Modelle, die den einzelnen Gesten zugeordnet sind, in einer Merkmalsdarstellung bereitgestellt, also in einer vorverarbeiteten Darstellung, um das Verfahren zu beschleunigen. In Schritt 716 wird die vorverarbeitete Darstellung des Bildausschnitts mit dem Modell der gesuchten Geste verglichen.

Der Vergleich kann beispielsweise auf einfache Weise durch Differenzbildung zwischen der vorverarbeiteten Darstellung des Bildausschnittes und dem Modell erfolgen, oder durch andere, komplexere Verfahren. In einem Verfahren mittels Differenzbildung oder Ähnlichkeitswertbildung, können beispielsweise die Grauwerte oder die Kantenrichtungsinformationen, die den einzelnen Bildelementen der vorverarbeiteten Darstellung des Bildausschnitts zugeordnet sind, durch bildelementweise Differenzbildung verglichen werden, und betragsmäßig addiert werden, um einem Gesamtdifferenzwert als Maß für die Ähnlichkeit für die vorverarbeiteten Darstellung des Bildausschnitts und dem Modell zu erhalten. In anderen Worten, bei dem Vergleich der vorverarbeiteten Darstellung des Bildausschnitts mit dem Modell wird ein Ähnlichkeitsgrad bestimmt, der in dem Schritt 718 zur Klassifikation des Bildausschnitts verwendet wird. Dabei wird die Geste 310 in dem zu klassifizierenden Bildausschnitt 520, 620 erkannt, wenn der Ähnlichkeitsgrad eine vorgegebene Ähnlichkeitsbedingung erfüllt, z.B. in einem vorbestimmten Bereich von Ähnlichkeitsgraden liegt. Dieser vorbestimmte Bereich von Ähnlichkeitsgraden kann beispielsweise durch einen Schwellwert definiert sein, wobei der Bereich abhängig von Vorverarbeitung und der Art des Vergleichs ein Bereich sein kann, der den Schwellwert und einen darüber liegenden Ähnlichkeitsgradbereich umfasst, oder den Schwellwert und alle Ähnlichkeitsgrade, die kleiner als der Ähnlichkeitsschwellwert sind.

Bei einem Verfahren, bei dem der Vergleich mittels Differenzbildung durchgeführt wird, wird das gesuchte Modell in dem Bildausschnitt 520, 620 dann erkannt, wenn der durch den Vergleich bestimmte Ähnlichkeitsgrad kleiner als ein vorbestimmter Ähnlichkeitsgradschwellwert ist oder kleiner gleich diesem Ähnlichkeitsgradschwellwert ist.

Wird die Geste nicht in der vorverarbeiteten Darstellung des ersten Bildausschnitts erkannt, ist also der Ähnlichkeitsgrad nicht in dem vorbestimmten Bereich, siehe Pfeil 720 (nein), so wird in einem nächsten Schritt 722 geprüft, ob der aktuelle Bildausschnitt der letzte Bildausschnitt des aktuellen Bildes gemäß der vorgegebenen Reihenfolge von Bildausschnitten ist. Da der aktuelle Bildausschnitt der erste Bildausschnitt des aktuellen Bildes ist, wird der nächste Bildausschnitt gemäß der vorgegebenen Reihenfolge für die Auswahl der Bildausschnitte in einem aktuellen Bild als neuer aktueller und zu klassifizierender Bildausschnitt ausgewählt, siehe Schritt 724 (nein).

In anderen Worten, das aktuelle zu untersuchende Bild, hier das erste Bild, wird Bildausschnitt für Bildausschnitt auf die Existenz der Geste untersucht.

Wird in Schritt 718 bei einem Vergleich eines aktuellen, zu klassifizierenden Bildausschnittes, z. B. 520 gemäß Fig. 5B, und dem Modell, z. B. 310 gemäß Fig. 3A, ein Ähnlichkeitsgrad bestimmt, der in dem vorbestimmten Bereich von Ähnlichkeitsgraden liegt, so wird gemäß Fig. 7 in Schritt 730, die Information ausgegeben, dass die Geste erkannt wurde und optional an welcher Position des aktuellen Bildes die Geste erkannt wurde. Die Positionsinformation dieses Erkennungsortes kann beispielsweise die Position des Bildausschnitts, indem die Geste erkannt wurde, sein.

In Schritt 732 wird der Bildausschnitt oder vielmehr die vorverarbeitete Darstellung des Bildausschnitts, indem die Geste erkannt wurde, in einem Zwischenspeicher zwischengespeichert.

Bildausschnitte, in denen die Geste erkannt wurde, werden auch als "positiv klassifizierte Bildausschnitte" bezeichnet oder als vorverarbeitete Darstellungen positiv klassifizierter Bildausschnitte.

Auf Schritt 734 "Löschen des Speichers", wird später noch eingehend eingegangen.

In Schritt 736 wird ein nächstes Bild in der Reihenfolge der Bilder als aktuelles und zu untersuchendes Bild ausgewählt und in Schritt 714, wie zuvor für das erste Bild, ein erster Bildausschnitt gemäß der Auswahlreihenfolge der Bildausschnitte aus dem aktuellen Bild ausgewählt. Die folgenden Schritte werden für das zweite und jedes weitere aktuelle und zu klassifizierende Bild so durchgeführt, wie es schon zuvor für das erste Bild als erstes aktuelles und zu klassifizierendes erläutert wurde.

Der zuvor beschriebene Teil des Verfahrens zum Erkennen einer Geste beruht allein auf dem Vergleich der vorverarbeiteten Darstellungen der Bildausschnitte mit den in der Trainingsphase erzeugten Modellen. In anderen Worten, dieser Teil des Verfahrens zum Erkennen beruht lediglich auf der Klassifikation der Bildausschnitte und Bilder mittels der Modelle.

Wird in einem Bild in keinem der Bildausschnitte durch den Vergleich mit dem Modell die Geste erkannt, können gemäß dem erfindungsgemäßen Verfahren zusätzlich Vergleiche mit Bildausschnitten früherer Bilder durchgeführt werden, in denen die Geste erkannt wurde.

In anderen Worten, wie in Fig. 7 dargestellt, wenn in einem zu klassifizierenden Bildausschnitt eines aktuellen Bildes durch den Vergleich mit dem Modell der Geste die Geste nicht erkannt wird (siehe 716), und dieser aktuelle zu klassifizierende Bildausschnitt der letzte Bildausschnitt gemäß der Auswahlreihenfolge der Bildausschnitte für ein Bild ist, wird der Bildausschnitt des vorhergehenden Bildes, mit anderen Worten, des direkten Vorgängerbildes, das in Schritt 732 in dem Zwischenspeicher zwischengespeichert wurde, in einem Bildausschnittsspeicher gespeichert, siehe Schritt 740. Zusätzlich zu dem zwischengespeicherten Bildausschnitt, genauer gesagt, der zwischengespeicherten vorverarbeiteten Darstellung des Bildausschnitts, wird auch die Position dieses Bildausschnitts in dem vorhergehenden Bild aus dem Zwischenspeicher ausgelesen, um in Schritt 742 einen Umgebungsbereich in dem aktuellen Bild, abhängig von dieser Positionsinformation zu bestimmen.

Der Umgebungsbereich ist größer als ein Bildausschnitt und kleiner als das Bild. Dabei wird die Größe des Bildbereichs so gewählt, dass abhängig von der Bildaufnahmefrequenz typische oder maximale translatorische Bewegungen der Hand von einem Bild zum nächsten noch in diesem Umgebungsbereich liegen. Beispielsweise kann der Umgebungsbereich als ein Vielfaches der Dimensionen eines Bildausschnittes bestimmt werden, beispielsweise die Höhe H3 und die Breite B3 des Umgebungsbereichs 630, siehe Fig. 6B, jeweils das 1,5-fache der Höhe H2 und der Breite B2 eines Bildausschnitts, siehe Fig. 2, betragen.

In Schritt 744 wird der in dem Bildausschnittsspeicher älteste gespeicherte Bildausschnitt, indem die Geste erkannt wurde, für einen Vergleich mit einem der Bildausschnitte aus dem Umgebungsbereich des aktuellen Bildes bereitgestellt. Analog zu der bildausschnittsweisen Untersuchung des gesamten Bildes gemäß einer Bildausschnittsreihenfolge, wird auch der Umgebungsbereich in dem aktuellen Bild gemäß einer Bildausschnittsreihenfolge abschnittsweise auf die Existenz der Geste untersucht. Dabei kann ähnlich wie in Fig. 4A dargestellt, mit dem Bildausschnitt links oben in dem Umgebungsbereich begonnen werden und dann zeilenweise der Umgebungsbereich abgesucht werden, oder auch mit dem Bildausschnitt, in dem die Geste in dem vorhergehenden Bild erkannt wurde.

In Schritt 746 wird entsprechend ein erster vorverarbeiteter Bildausschnitt des Umgebungsbereiches in dem aktuellen Bild für einen Vergleich bereitgestellt oder ausgewählt. Da in dem vorliegenden Ausführungsbeispiel das gesamte aktuelle Bild in einer vorverarbeiteten Darstellung vorliegt, liegt auch der Umgebungsbereich in einer vorverarbeiteten Darstellung vor, so dass auch hier der erste Bildausschnitt des Umgebungsbereiches schon in einer vorverarbeiteten Darstellung vorliegt, und somit direkt ohne weitere Vorverarbeitungsschritte mit dem ältesten gespeicherten Bildausschnitt, in dem die Geste erkannt wurde, verglichen werden kann, um einen Ähnlichkeitsgrad zwischen dem ersten Bildausschnitt des Umgebungsbereichs des aktuellen Bildes und dem ältesten gespeicherten Bildausschnitt, indem die Geste erkannt wurde, zu bestimmen (Schritt 748).

In Schritt 750 wird der Ähnlichkeitsgrad aus Schritt 748 ausgewertet, indem dieser beispielsweise mit einem Ähnlichkeitsgradschwellwert verglichen wird und die Geste in dem ersten Bildausschnitt als aktuellem Bildausschnitt des Umgebungsbereichs erkannt, wenn der Ähnlichkeitsgrad in einem vorbestimmten Bereich und Ähnlichkeitsgraden liegt. In Bezug auf das Erkennen der Geste, oder in anderen Worten, der Klassifikation 750, wird auf die Erläuterungen bezüglich der Klassifikation in Schritt 718 verwiesen. Wird die Geste nicht in dem ersten Bildausschnitt als aktuellem Bildausschnitt erkannt, liegt also der Ähnlichkeitsgrad nicht in dem vorbestimmten Bereich, so wird in Schritt 752 (siehe nein) geprüft, ob der aktuelle Bildausschnitt des Umgebungsbereiches der letzte Bildausschnitt des Umgebungsbereichs gemäß der Bildausschnittsreihenfolge ist. Ist der aktuelle Bildausschnitt, hier der erste Bildausschnitt, nicht der letzte (siehe "nein" in Fig. 7), so wird in Schritt 754 der gemäß der Bildausschnittsreihenfolge nächste Bildausschnitt des Umgebungsbereichs des aktuellen Bildes ausgewählt, um ihn in Schritt 748 mit dem ältesten gespeicherten Bildausschnitt, in dem die Geste erkannt wurde, zu vergleichen, und wiederum die Klassifikation gemäß Schritt 750 durchzuführen, usw. In anderen Worten, der Umgebungsbereich des aktuellen Bildes wird bildausschnittsweise auf die Existenz der Geste untersucht.

Wird bei der Klassifikation in Schritt 750 in einem zu klassifizierenden Bildausschnitt des Umgebungsbereichs des aktuellen Bildes durch den Vergleich mit dem ältesten in dem Bildausschnittsspeicher (Stapelspeicher) gespeicherten Bildausschnitt, in dem die Geste erkannt wurde, erkannt, liegt also der Ähnlichkeitsgrad in dem vorbestimmten Ähnlichkeitsgradbereich, (siehe "ja" in Fig. 7), so wird in Schritt 760 die erkannte Geste und ggf. die Position der Geste ausgegeben. Für weitere Erläuterungen bezüglich der Ausgabe wird auf die Erläuterungen zum Schritt 730 verwiesen. Wie in Schritt 732 wird der Bildausschnitt des Umgebungsbereich des aktuellen Bildes, indem die Geste erkannt wurde, sowie dessen Position in dem Zwischenspeicher gespeichert. Für weitere diesbezügliche Erläuterungen wird auch hier auf die Erläuterungen zu Schritt 732 verwiesen.

In Schritt 764 werden alle in dem Bildausschnittsspeicher gespeicherten positiv klassifizierten Bildausschnitte, die jünger sind als der älteste positiv klassifizierte Bildausschnitt, mittels dessen die Geste in dem aktuellen Bildausschnitt des Umgebungsbereichs erkannt wurde, gelöscht. Dies wird später noch eingehender erläutert.

In Schritt 736 wird dann ein nächstes Bild als aktuelles zu klassifizierendes Bild gemäß der zeitlichen Reihenfolge der Bilder ausgewählt, um dieses, wie zuvor beschrieben, auf die Existenz der Geste zu untersuchen.

Wird in keinem der klassifizierenden Bildausschnitte des Umgebungsbereichs des aktuellen Bildes mittels des Vergleichs des aktuellen positiv klassifizierten Bildausschnitts erkannt und ist der aktuelle zu klassifizierende Bildausschnitt der letzte zu klassifizierende Bildausschnitt in dem Umgebungsbereich des aktuellen zu untersuchenden Bildes (siehe "ja" nach Prüfung 752), so wird in Schritt 770 geprüft, ob der aktuelle positiv klassifizierte Bildausschnitt der jüngste in dem Bildausschnittsspeicher gespeicherte positiv klassifizierte Bildausschnitt ist, indem die Geste erkannt wurde. Ist dies nicht der Fall (siehe "nein" nach Prüfung 770), wird der in Bezug auf den aktuellen positiv klassifizierten Bildausschnitt nächst jüngere positiv klassifizierte Bildausschnitt (siehe 772), der in dem Bildausschnittsspeicher gespeichert ist, als aktueller positiv klassifizierter Bildausschnitt für einen weiteren Vergleich der Bildausschnitte des Umgebungsbereichs des aktuellen Bildes bereitgestellt, um zu prüfen, ob basierend auf diesem positiv klassifizierten Bildausschnitt die Geste in einem der Bildausschnitte des Umgebungsbereichs des aktuellen Bildes erkannt wird, usw. In anderen Worten, die Bildausschnitte des Umgebungsbereichs des aktuellen Bildes werden sukzessive mit den positiv klassifizierten, in dem Bildausschnittsspeicher gespeicherten Bildausschnitte verglichen, um den Umgebungsbereich des aktuellen Bildes auf die Existenz der Geste zu untersuchen, wobei mit dem ältesten gespeicherten positiv klassifizierten Bildausschnitt begonnen wird, und dann sukzessive die nächst jüngeren positiv klassifizierten Bildausschnitte bis gegebenenfalls zum jüngsten positiv klassifizierten Bildausschnitt für die Untersuchung bzw. den Vergleich verwendet werden.

Ist auch basierend auf dem jüngsten positiv klassifizierten und in dem Bildausschnittsspeicher gespeicherten Bildausschnitt in keinem der Bildausschnitte des Umgebungsbereichs des aktuellen Bildes die Geste erkannt worden (siehe "ja" nach Prüfung 770), so ist auch der Vergleich mit den positiv klassifizierten Bildausschnitten erfolglos, und es wird in Schritt 780 die Information ausgegeben, dass die Geste in dem aktuellen Bild nicht gefunden wurde, in Schritt 734 der Bildausschnittspeicher gelöscht und in Schritt 736 das nächste Bild gemäß der zeitlichen Reihenfolge der Bilder für einen nächsten Durchgang des Verfahrens gemäß Fig. 7 ausgewählt.

In dem Zwischenspeicher (siehe Schritt 732 und 762), wird der Bildausschnitt des aktuellen Bildes und dessen Position in Bezug auf das aktuelle Bild zwischengespeichert, um für den Fall, dass in keinem der Bildausschnitte des nächsten Bildes in der Folge von Bildern die Geste mittels des Modells erkannt wird (siehe "ja" nach Prüfung 722), dieser in dem Bildausschnittsspeicher gespeichert wird, um als jüngster gespeicherter positiv klassifizierter Bildausschnitt für einen Vergleich nach Schritt 748 und einer Klassifikation nach Schritt 750 zur Verfügung zu stehen. In anderen Worten, dieses aktuelle Bild wird nach dem Auswählen des nächsten Bildes in Schritt 744 das vorhergehende oder nächst ältere Bild in Bezug auf das neue aktuelle Bild, das dann die Schritte 714 und folgende durchläuft.

Gemäß einem Ausführungsbeispiel, ist in dem Zwischenspeicher nur der positiv klassifizierte Bildausschnitt des direkten Vorgängerbildes, oder anders ausgedrückt nur des nächst älteren Bildes, gespeichert.

Die Speicherung der Position des Bildausschnitts, indem die Geste im vorhergehenden Bild erkannt wurde, ermöglicht eine Eingrenzung des Suchbereichs, also auf den Umgebungsbereich, innerhalb des Bildes, und somit eine Beschleunigung des Erkennungsverfahrens.

Im Folgenden soll anhand von Beispielen die Funktionsweise eines Ausführungsbeispiels gemäß Fig. 7 des Verfahrens und des Systems näher erläutert werden.

Dabei wird zur Erläuterung beispielsweise davon ausgegangen, dass der Zwischenspeicher und der Bildausgangsspeicher zurückgesetzt bzw. gelöscht sind, um eine neue Folge von Bildern auf die Existenz der Geste zu untersuchen. Dabei wird in dem ersten Bild durch Vergleiche mit dem Modell der Geste (Schritt 716 und 718) in keinem der Bildausschnitte die Geste erkannt (siehe "ja" nach Prüfung 722). Da sowohl der Zwischenspeicher als auch der Bildausschnittsspeicher leer sind, ist keine Prüfung mittels positiv klassifizierter Bildausschnitte aus vorhergehenden Bildern möglich, so dass die Untersuchung des ersten Bildes mit dem Ergebnis "Geste nicht erkannt" beendet wird, und das zweite Bild der Folge untersucht wird (nicht in Fig. 7 dargestellt). Für das zweite Bild der Folge wird angenommen, dass in einem Bildausschnitt desselben die Geste mittels des Modells erkannt wird (siehe "ja" nach Prüfung 718). Dieser positiv klassifizierte Bildausschnitt und dessen Position in dem zweiten Bild werden in dem Zwischenspeicher zwischengespeichert (siehe Schritt 732) und in Schritt 744 das dritte Bild der Folge als nächstes Bild für die Untersuchung ausgewählt wird. In dem dritten Bild wird ebenfalls mittels des Modells der Geste die Geste erkannt ("ja" nach Prüfung 718) und in Schritt 732 der positiv klassifizierte Bildausschnitt des zweiten Bildes und dessen Position darin durch den positiv klassifizierten Bildausschnitt des dritten Bildes als aktuellem Bild sowie dessen Position in dem dritten Bild in dem Zwischenspeicher überschrieben. Der Bildausschnittsspeicher ist weiterhin leer. In Schritt 736 wird das vierte Bild der Folge ausgewählt, bei dem die Geste in keinem der Bildausschnitte mittels des Modells der Geste erkannt wird (siehe "ja" nach Prüfung 722). In Schritt 740 wird daher der positiv klassifiziert Bildausschnitt des dritten Bildes aus dem Zwischenspeicher ausgelesen und in dem Bildausschnittsspeicher als ältester positiv klassifizierter Bildausschnitt gespeichert. In dem Bild 4 wird basierend auf der Positionsinformation über die Position des positiv klassifizierten Bildausschnitts des dritten Bildes in demselben der Umgebungsbereich in dem vierten Bild definiert (siehe Schritt 742). In dem Beispiel wird ferner angenommen, dass der Vergleich zwischen einem der Bildausschnitte des Umgebungsbereichs des vierten Bildes mit dem positiv klassifizierten Bildausschnitt als ältestem gespeicherten Bildausschnitt (Schritt 744) die Geste erkannt wird (siehe "ja" nach Prüfung 750), so dass in Schritt 762 der Inhalt des Zwischenspeichers mit dem positiv klassifizierten Bildausschnitt des vierten Bildes sowie dessen Position in dem vierten Bild in dem Zwischenspeicher gespeichert wird, der vorhergehende und dessen Positionsinformation also überschrieben wird. Da keine jüngeren positiv klassifizierten Bildausschnitte in dem Bildausschnittsspeicher gespeichert sind, bleibt Schritt 764 ohne Wirkung und es wird in Schritt 736 das fünfte Bild als nächstes Bild der Folge ausgewählt. In dem fünften Bild führt der Vergleich mit dem Modell die Geste in keinen der Bildausschnitte des fünften Bildes zum Erfolg (siehe "ja" nach Prüfung 722), so dass in Schritt 740 der positiv klassifizierte Bildausschnitt des vierten Bildes aus dem Zwischenspeicher in den Bildausschnittsspeicher geladen wird, wobei der Bildausschnitt als ein Bildausschnitt, der dem vierten Bild zugeordnet ist, einem späteren oder jüngeren Bild als dem dritten Bild zugeordnet ist, und damit einen jüngeren oder späteren positiv klassifizierten Bildausschnitt in dem Bildausschnittsspeicher bildet.

Der Bildausschnittsspeicher kann beispielsweise ein Stapelspeicher sein, im Englischen als "stack" bezeichnet, bei dem der älteste positiv klassifizierte Bildausschnitt unten gespeichert wird und die nächst jüngeren positiv klassifizierten Bildausschnitte jeweils auf dem nächst älteren.

In Schritt 744 wird der Umgebungsbereich in dem fünften Bild, basierend auf der zwischengespeicherten Positionsinformation des positiv klassifizierten Bildausschnitts des vierten Bildes bestimmt, und in Schritt 744 der in dem Stapelspeicher als ältester positiv klassifizierter Bildausschnitt gespeicherte Bildausschnitt des dritten Bildes für den Vergleich in Schritt 748 ausgewählt.

In diesem Beispiel wird nun weiter davon ausgegangen, dass in keinem der zu klassifizierenden Bildausschnitte des Umgebungsbereichs des fünften Bildes mittels des ältestes positiv klassifizierten gespeicherten Bildausschnitts die Geste erkannt wird (siehe "nein" nach Prüfung 750), so dass in einem nächsten Durchlauf (siehe Schritt 742) der positiv klassifizierte Bildausschnitt des vierten Bildes, der in dem Stapelspeicher als nächst jüngerer positiv klassifizierter Bildausschnitt gespeichert ist, für den Vergleich in Schritt 748 ausgewählt wird. Hier wird nun angenommen, dass in einem der Bildausschnitte des Umgebungsbereichs des fünften Bildes die Geste mittels dieses nächst jüngeren bzw. zweiten positiv klassifizierten Bildausschnitts erkannt wird (siehe "ja" nach Prüfung 750), so dass dieser Bildausschnitt des Bildes 5 sowie des Position in diesem Bild in dem Zwischenspeicher gespeichert werden. Da der zweite in den Stapelspeicher gespeicherte positiv klassifizierte Bildausschnitt der jüngste Eintrag in dem Stapelspeicher ist, bleibt das Löschen 764 ohne Wirkung, und es wird in Schritt 736 das sechste Bild für die weitere Untersuchung ausgewählt. Hierbei wird davon ausgegangen, dass das Bild 5 den größten Auslenkwinkel α gegenüber der Bildebene 114 der Kamera aufwies, und Bild 6 aufgenommen wurde, als die Hand 642 sich, wie mit Pfeil 654 gezeigt, wieder in einer Drehbewegung zurück zur Bildebene befand, also einen kleineren Winkel α als das Bild 5 in Bezug auf die Bildebene 114 aufweist. Dabei wird ferner davon ausgegangen, dass in keinem der Bildausschnitte des sechsten Bildes die Geste mittels des Modells der Geste erkannt wurde (siehe "ja" nach Prüfung 722), so dass der in dem Zwischenspeicher befindliche positiv klassifizierte Bildausschnitt des fünften Bildes als dritter und jüngster Eintrag in dem Stapelspeicher gespeichert wird (siehe Schritt 740) und die mit ihm zwischengespeicherte Positionsinformation in Schritt 742 zur Definition des Umgebungsbereichs in dem Bild 6 verwendet wird. Der positiv klassifizierte Bildausschnitt des dritten Bildes ist weiterhin der erste und älteste Eintrag in dem Stapelspeicher bzw. Bildausschnittspeicher, so dass dieser in Schritt 744, 748 zum Vergleich ausgewählt wird. Dabei wird in diesem Beispiel davon ausgegangen, dass in einem der Bildausschnitte des Umgebungsbereichs des sechsten Bildes die Geste mittels diese ältesten Eintrags erkannt wird, (siehe "ja" nach Prüfung 750), so dass der Bildausschnitt sowie dessen Position in dem sechsten Bild in dem Zwischenspeicher gespeichert werden (Schritt 762). In Schritt 764 werden nun der zweite und der dritte Eintrag, also der Bildausschnitt des vierten und fünften Bildes, gelöscht, da sie jüngere Einträge gegenüber dem ältesten Eintrag bzw. Bildausschnitt bilden, mit dem die Geste erkannt wurde. In Schritt 744 wird das siebte Bild als nächstes Bild ausgewählt.

Dabei könnte, für den Fall, dass die Hand sich wieder in Richtung des Pfeils 650 bewegt, der Drehwinkel α gegenüber dem Bild 6 also wieder größer wird, die Anzahl der Einträge des Stapelspeichers wieder erhöhen, bis sie beispielsweise aufgrund einer Rückdrehung, siehe Pfeil 654, wieder geringer werden.

Im vorliegenden Fall wird jedoch zur Erläuterung des Verfahrens davon ausgegangen, dass der Drehwinkel α des siebten Bildes wesentlich geringer ist als der des sechsten Bildes, beispielsweise, wie in Fig. 5A gezeigt, sogar auf der Bildebene liegt, so dass in einem Bildausschnitt des siebten Bildes die Geste schon mit dem Modell erkannt wird (siehe "ja" nach Prüfung 718), so dass in Schritt 732 dieser Bildausschnitt des siebten Bildes zusammen mit dessen Position innerhalb des siebten Bildes in dem Zwischenspeicher gespeichert wird. Ferner wird in Schritt 734 der gesamte Stapelspeicher gelöscht, also auch der älteste Bildausschnitt aus Bild 3, und in Schritt 736 das achte Bild als nächstes Bild ausgewählt.

Fig. 7 zeigt also ein Ausführungsbeispiel, bei dem in einer ersten Stufe, die auch als Detektionsstufe bezeichnet werden kann, eine Untersuchung des Bildes oder der Bildausschnitte mittels Modellen durchgeführt wird, während in einer zweiten Stufe (siehe "ja" nach Prüfung 722), die auch als Nachverfolgungsstufe oder "Tracking-Stufe" verwendet werden kann, die Untersuchung der Bilder oder Bildausschnitte mit positiv klassifizierten. Bildausschnitten früherer Bilder durchgeführt werden.

Obwohl Fig. 7 ein Ausführungsbeispiel des Verfahrens zeigt, bei dem zunächst, also in der Detektionsstufe, alle Bildausschnitte eines Bildes mit dem Modell oder den Modellen der Gesten oder Objekte verglichen werden, bevor in der zweiten Stufe alle Bildausschnitte des Umgebungsbereichs mit dem positiv klassifizierten Bildausschnitten vergleichen, können in alternativen Ausführungsbeispielen auch andere Prüfungsreihenfolgen realisiert werden, zum Beispiel derart, dass jeder Bildausschnitt zunächst mit dem oder den Modellen der Gesten oder Objekte verglichen wird und bei Nicht-Erkennung mit allen oder Teilen der positiv klassifizierten Bildausschnitte verglichen wird, bevor der nächste Bildausschnitt wieder mit dem oder den Modellen der Gesten oder Objekte verglichen wird.

Entsprechend können auch in anderen Ausführungsbeispielen die Schritte des Verfahrens gemäß Fig. 7 in anderer Reihenfolge ausgeführt werden, z. B. die Schritte 730, 732, 734 in beliebiger anderer Reihenfolge, ebenso wie die Schritte 760, 762 und 764, sowie die Schritte 740, 742 und 744, um nur einige Beispiele zu nennen. Ausführungsbeispiele des Systems zum Erkennen eines Objektes oder einer Geste weisen zumindest eine Kamera 110 und eine Verarbeitungseinheit 120, z. B. einen Computer 120 auf. Dabei ist die Kamera 110 ausgebildet, eine Folge von Bildern zu erzeugen, die diese dann der Verarbeitungseinheit 120 bereitstellt, und die diese dann beispielsweise gemäß einem Ausführungsbeispiel gemäß Fig. 7 auf Objekte oder Gesten untersucht.

Im Folgenden wird ein Ausführungsbeispiel analog zu dem in Fig. 7, jedoch für die Erkennung einer Hand in einer Folge von Bildern beschrieben, wobei das Verfahren bzw. das System eine Aussage über die Existenz einer Hand oder Nicht-Existenz einer Hand in den Bildern der Folge von Bildern trifft, also eine Klassifikationsaussage "Hand" oder "Nicht-Hand" leistet und die Position der "Hand" in dem Bild bestimmt.

Für die Detektion der Hand wird ein Modell der Hand benötigt. Dieses Modell wird benutzt, um bei einem Vergleich für jeden zu untersuchenden Ausschnitt in einem Bild zu einer Klassifikationsaussage, "Hand" bzw. "Nicht-Hand" zu kommen. Dieses Modell wird zuvor in einer Trainingsphase erzeugt. In dem Modell stecken Informationen darüber, welche Merkmale in einem bestimmten Bildausschnitt an welcher Stelle berechnet werden und wie aus diesem Merkmal die für die Klassifikation nötige Kennzahl berechnet wird. Bei der Klassifikation wird mit Hilfe dieser Kennzahlen darüber bestimmt, ob der Bildausschnitt zu der gesuchten Klasse "Hand" oder "Nicht-Hand" gehört. Derartige Trainingsprozesse sind bekannt, z. B. kann das Training mit einem Boosting-Verfahren erfolgen, wie es z. B. durch J. Freund und R.E. Schapire "A short introduction to Boosting" in Journal of Japanese Society for Artificial Intelligence, No. 14, pp. 771 - 780, September 1999, beschrieben ist.

Wenn nun über mehrere Frames bzw. Bilder hinweg die Hand weiter detektiert werden soll, kann dies zum einen durch kontinuierliche Detektion geschehen, das heißt, es wird in jedem Folgebild wieder mit dem gleichen Modell gesucht.

Ändert sich das zu detektierende Objekt aber stärker über die Zeit, z. B. dreht sich die Hand oder ändert dabei die Form, so kann es passieren, dass die Detektion nicht mehr erfolgreich ist.

Ausführungsbeispiele der vorliegenden Erfindung ermöglichen zumindest eine Verringerung dieses Problems, indem einem nicht mehr detektierten Objekt, z. B. der Hand ein Vorlagen-Stapelspeicher, im Englischen auch als "Template Stack" bezeichnet, zur Zwischenspeicherung von Bildausschnitten zugewiesen, dessen Funktion im Folgenden näher erläutert wird.

Für das nicht mehr detektierte Objekt wird der Ausschnitt vom letzten Detektionsort oder Trackingort auf dem Vorlagen-Speicherstapel des Objektes abgelegt, sofern der Vorlagen-Stapelspeicher nicht eine vorgegebene maximale Größe erreicht hat. Danach erfolgt ein Vergleich in örtlicher und größenmäßiger Umgebung des letzten Detektions- oder Trackingorts im aktuellen Bild mit den Einträgen auf dem Vorlagen-Stapelspeicher, beginnend mit der ältesten Vorlage, im Englischen auch als "Template" bezeichnet. Die Suche kann mit der Umgebung erst grob erfolgen und an interessanten Stellen verfeinert werden. Der Vergleich kann auf einfache Weise durch Differenzbildung im Bildbereich erfolgen, aber auch auf komplexeren Verfahren zum Bildvergleich basieren.

War der Vergleich erfolgreich, werden alle Vorlagen vom Vorlagen-Stapelspeicher entfernt, die neuer sind als die erste Vorlage, mit der der Vergleich erfolgreich war. Die Position und Größe des Ausschnitts im aktuellen Bild, dass die beste Übereinstimmung mit der ältesten erfolgreich verglichenen Vorlage lieferte, wird als neue Lage des Objektes übernommen.

War der Vergleich nicht erfolgreich, wird das Tracking für dieses Objekt abgebrochen. Ebenso beendet ein Objekt, das durch Detektion wiedergefunden wurde, das Tracking.

In weiteren Ausführungsbeispielen kann die Größe des Bildausschnitts dynamisch, abhängig von der Größe des zuletzt detektierten Objektes, angepasst werden und/oder anstelle der Schwellwertentscheidung eine Maximumentscheidung für den Vergleich mit den Vorlagen bzw. Bildausschnitten verwendet werden.

Obwohl Ausführungsbeispiele des Verfahrens anhand der Erkennung einer Geste, siehe Fig. 7 oder wie zuvor für die Erkennung und Klassifikation eines Körperteils, nämlich der Hand beschrieben wurden, können Ausführungsbeispiele der vorliegenden Erfindung für beliebige bewegliche Objekte in analoger Weise eingesetzt werden.

Weitere Ausführungsbeispiele des Verfahrens ermöglichen nicht nur die Erkennung eines Objektes, sondern die gleichzeitige Erkennung mehrerer unterschiedlicher Objekte, Körperteile oder Gesten. In anderen Worten, Ausführungsbeispiele des Verfahrens können für die Klassifikation zwischen "kein Objekt", "erstes Objekt", "zweites Objekt" etc. oder "keine Geste", "erste Geste", "zweite Geste", etc. eingesetzt werden. Beispielsweise können Ausführungsbeispiele des Verfahrens eingesetzt werden, um die zwei Gesten 310 und 320 aus den Fig. 3A und 3B zu erkennen, wobei in dem Ausführungsbeispiel gemäß Fig. 7 jeder Bildausschnitt in Schritt 716 nicht nur mit dem Modell der ersten Geste, z. B. 310, sondern auch mit dem Modell der zweiten Geste 320 vergleichen wird, um im Schritt 718 eine Klassifikation herbeizuführen.

Entsprechend werden Bildausschnitte des aktuellen Bildes in Schritt 748 nicht nur mit den Bildausschnitten, die Vorlagen für die Erkennung alternativ zu den Modellen bilden, verglichen, in denen die erste Geste 310 erkannt wurde, sondern auch mit den positiv klassifizierten Bildausschnitten, in denen die zweite Geste 320 erkannt wurde. Dabei können die positiv klassifizierten Bildausschnitte, in denen die erste Geste erkannt wurde, auf einem ersten Stapelspeicher gespeichert werden, und die positiv klassifizierten Bildausschnitte, in denen die zweite Geste 320 erkannt wurde, auf einem zweiten Stapelspeicher gespeichert werden, oder alle in einem Speicher, in dem zusätzlich zu dem positiv klassifizierten Bildausschnitt noch die Information gespeichert ist, welche Geste in dem jeweiligen positiv klassifizierten Bildausschnitt erkannt wurde.

Obwohl als Ausführungsbeispiel des Bildausschnittspeichers zuvor ein Stapelspeichern genannt wurde, können auch jegliche andere Speicherarten eingesetzt werden, wobei dann die zeitliche Rangfolge der positiv klassifizierten Bildausschnitte mit gespeichert wird, um diese in der Reihenfolge beginnend vom ältesten auslesen zu können, oder diese positiv klassifizierten Bildausschnitte derart gespeichert werden, analog zum Stapelspeicher, dass diese in aufeinanderfolgenden Adressen abgespeichert sind, so dass dieser durch Inkrementieren eines Zeigers adressiert und ausgelesen werden können.

In weiteren Ausführungsbeispielen kann der Zwischenspeicher für die Schritte 732, 762 und 740 auch in dem Stapelspeicher oder einem anderen Bildausschnittsspeicher integriert sein.

Ausführungsbeispiele der vorliegenden Erfindung, die ausgebildet sind, um zwei verschiedene Gesten, zum Beispiel die offene Hand als erste Geste und die geballte Faust als zweite Geste zu erkennen, ermöglichen mit dem zweistufigen Ansatz, bei dem zunächst die Bildausschnitte mit den Modellen der Gesten verglichen werden, und erst dann auf die positiv klassifizierten Bildausschnitte zurückgegriffen wird, dass die zweite Geste zuverlässig erkannt wird und nicht aufgrund eines positiv klassifizierten Bildausschnitts der ersten Geste falsch zugeordnet wird.

Weitere Ausführungsbeispiele des erfindungsgemäßen Verfahrens zum System sind ausgebildet, ein Objekt oder eine Geste zu erkennen, sondern auch die Bewegung derselben zu erfassen. Dabei wird die Positionsinformation, die beispielsweise in den Schritten 730 oder 760 ausgeben wird, verwendet, um basierend auf der Positionsinformation des aktuell erkannten Objektes oder der aktuell erkannten Geste und der Positionsinformation über die Position des Objektes oder der Geste, die in dem vorhergehenden Bild erkannt wurde, beispielsweise eine Ortsänderung als Änderung in Pixeln bezüglich der waagrechten und/oder senkrechten innerhalb der Bildebene der Kamera 110 zu bestimmen.

Weitere Ausführungsbeispiele, die ausgebildet sind, eine oder mehrere Gesten zu erkennen, und die Bewegung der Geste zu erfassen, können ferner verwendet werden, um beispielsweise ein Bildverarbeitungssystem kontaktlos und gestik-basiert zu steuern. Beispielsweise können Ausführungsbeispiele der vorliegenden Erfindung derart ausgestaltet sein, dass wenn sie eine erste Gerste, z. B. eine offene Hand erkennen, einen Bildschirmzeiger, auch als "Curser" bezeichnet, mit der Hand bzw. der Geste koppeln, so dass der Bildschirmzeiger die Bewegung der offenen Hand auf dem Bildschirm nachvollzieht, also entsprechend der relativen Bewegung der offenen Hand in der Bildschirmdarstellung bewegt wird. Durch ein Verharren der offenen Hand über einen bestimmten Bereich, zum Beispiel einem Tastenbereich oder einem anderen vordefinierten Bildschirmbereich, wird nach Ablauf einer vorgegebenen Zeit dies als Aktivierung bzw. Drücken der Taste interpretiert, und somit eine Aktion des Systems ausgelöst. Entsprechend können auch Auswahlfelder bedient werden, indem die offene Hand über einen Auswahlfeld für eine bestimmte Zeit verharrt, dass diese Auswahl aktiviert wird oder umgekehrt auch wieder deaktiviert wird. In einem weiteren Ausführungsbeispiel kann die offene Hand auch über einem Schieberegler verharren, so dass nach einer gewissen Zeit der Schieberegler mit der Hand gekoppelt wird und der Schieberegler mittels der offenen Hand bedient werden kann. Ein weiteres Verharren in einer bestimmten Schiebereglerposition entkoppelt dann beispielsweise wieder den Schieberegler von der offenen Hand. Erkennt das System oder das Verfahren die offene Hand nicht mehr, wird der Bildschirmzeiger wieder von der offenen Hand entkoppelt und verharrt somit an der aktuellen Position, obwohl sich die Hand selbst bewegt.

Durch die Erkennung von zwei oder mehr Gesten kann die Steuerung des System 100 vereinfacht werden, und/oder komplexere Steuerungsfunktionen implementiert werden.

Die Erfindung schafft somit auch ein Verfahren zum Erzeugen einer Markierung in einer Bildschirmdarstellung mittels eines berührungslos gestikgesteuerten Bildschirmzeigers, mit den im Folgenden erläuterten Schritten.

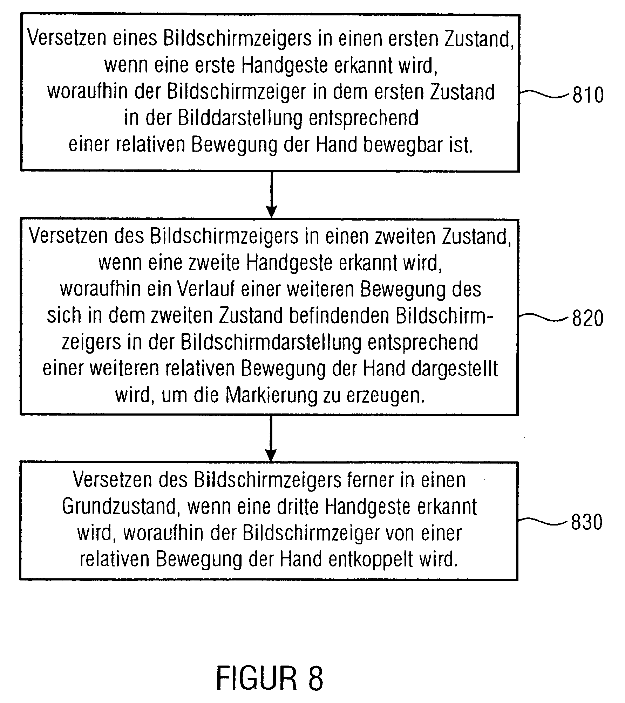

Fig. 8 zeigt ein Flussdiagramm eines Verfahrens zum Erzeugen einer Markierung in einer Bildschirmdarstellung mittels eines berührungslos gestik-gesteuerten Cursors.

Dabei wird in Schritt 810 der Bildschirmzeiger in einen ersten Zustand versetzt, wenn eine erste Handgeste erkannt wird, woraufhin der Bildschirmzeiger in dem ersten Zustand in der Bilddarstellung entsprechend einer relativen Bewegung der Hand bewegbar ist.

In Schritt 820 wird der Cursor in einen zweiten Zustand versetzt, wenn eine zweite Handgeste, z. B. die geballte Faust 320, erkannt wird, woraufhin ein Verlauf einer weiteren Bewegung des sich in dem zweiten Zustand befindenden Bildschirmzeigers in der Bildschirmdarstellung entsprechend einer weiteren relativen Bewegung der Hand dargestellt wird, um die Markierung zu erzeugen.

In einem Schritt 830 kann der Bildschirmzeiger ferner in einen Grundzustand versetzt werden, wenn eine dritte Handgeste erkannt wird, woraufhin der Bildschirmzeiger von einer relativen Bewegung der Hand entkoppelt wird.

Fig. 1 zeigt ferner ein Ausführungsbeispiel eines Systems zum Erzeugen einer Markierung in einer Bildschirmdarstellung mittels eines gestik-gesteuerten Bildschirmzeigers mit einer Kamera 110 zum Erzeugen zumindest eines Bildes, oder in anderen Worten, einer Folge von Bildern, einem Bildschirm 130 für die Bildschirmdarstellung; und einer Steuereinheit 120, zum Beispiel einem Computer. Die Steuereinheit 120 ist ausgebildet, den Bildschirmzeiger in einen ersten Zustand zu versetzen, wenn die Steuereinheit in einem von der Kamera erzeugten Bild oder einer von der Kamera erzeugten Bildfolge eine erste Handgeste erkennt, woraufhin der sich in dem ersten Zustand befindende Cursor in der Bildschirmdarstellung entsprechend einer relativen Bewegung der Hand von der Steuereinheit bewegbar ist. Die Steuereinheit ist ferner ausgebildet, den Cursor in einen zweiten Zustand zu versetzen, wenn die Steuereinheit in einem von der Kamera erzeugten Bild oder von der Kamera erzeugten Bildfolge eine zweite Handgeste erkennt, wobei die Steuereinheit ferner ausgebildet ist, um einen Verlauf einer weiteren Bewegung des sich in dem zweiten Zustand befindenden Bildschirmzeigers in der Bildschirmdarstellung entsprechend einer weiteren relativen Bewegung der Hand darzustellen, um die Markierung zu erzeugen.

Ausführungsbeispiele des zuvor genanten Verfahrens und des Systems sind somit geeignet, wie in Fig. 1 dargestellt, Bereiche in der Bildschirmdarstellung, zum Beispiel von Operationsbildern oder anderen medizinischen Bildern, freihändig zu markieren, um diese dann beispielsweise in der Bildschirmdarstellung zu färben, zu vergrößern oder zu speichern. Durch die freihändige Markierung können Bereiche mit beliebigen Konturen bzw. Randlinien ausgewählt werden.

In anderen Worten, Ausführungsbeispiele des Systems gemäß Fig. 1 oder entsprechender Verfahren ermöglichen eine Verknüpfung einer gestik-basierten Steuerung auf der Basis monokularer Consumerkameras 110 mit Systemen für die Bildsegmentierung. Die gestik-basierte Steuerung erlaubt dabei, dem Benutzer nicht nur kommando-ähnliche Gesten zu interpretieren, wie beispielsweise "aus", "an", "auf", "ab", "rechts", "links", sondern erlaubt es darüber hinaus, eine verdächtige Region, z. B. eine vermutete Dysplasie oder Tumorvorstufe in einem aktuell angezeigten medizinischen Bild zu markieren. Für die Gestikerkennung kann eine einzelne Consumer-Kamera mit dem Bildbefundungssystem, beispielsweise dem EndoCAD des Fraunhofer Instituts IIS, verbunden werden, in deren Blickfeld der Apparateur tätig ist, vgl. Person 140 in Fig. 1. Mittels verschiedener intuitiver Gesten, z. B. einer offenen Hand oder einer Faust, kann der Mauszeiger bewegt, der Mauszeiger ergriffen, z. B. durch die Geste "Handschließen" ergriffen werden, durch eine Kreisbewegung eine Umrandung gezeichnet und durch Öffnen der Hand der Mauszeiger wieder losgelassen werden.

Verfahren zur Gestikerkennung und Bewegungsdetektion, wie zuvor beschrieben, werten die Bilder dieser Kameras in Echtzeit aus und steuern damit das eigentliche Diagnoseunterstützungssystem. Hierfür kann eines der zuvor erläuterten Systeme oder Verfahren zur Erkennung von Objekten oder Gesten in Kombination mit dem Verfahren aus der Patentschrift DE 100 43 460 C2 "Detektion von Körperpartien mit hoher Erkennungssicherheit" angewendet werden.

Wie zuvor erläutert, kann in ambulanten Situationen, z. B. bei der Untersuchung des Magen-Darm-Trakts, die Nutzung von Touch-Screens, das berührungsempfindlichen Bildschirmen, bei der Interaktion zwischen Mensch und Maschine möglich sein, z. B. für die Untersuchung der Speiseröhre. In sterilen Umgebungen, wie z. B. offenen chirurgischen Operationen muss eine direkte Berührung der Geräte durch den Chirurgen vermieden werden. Die Kommunikation zwischen Mensch und Maschine in einer sterilen Umgebung kann durch geeignete Gestik-Steuerungen erfolgen. Mit Hilfe einer einzelnen Kamera werden die Gesten eines Benutzers 140 erfasst und auf die Maus des Bildschirms übertragen, um mittels der Mausbewegungen, z. B. eine Segmentierung eines Bildes berührungslos durchführen zu können. In anderen Worten, Ausführungsbeispiele des Verfahrens und des Systems schaffen eine berührungslose gesten-basierte Interaktion für medizinische Bildverarbeitungssysteme mittels Consumerkameras. So verknüpfen die Systeme beispielsweise ein medizinisches Bildverarbeitungssystem zur Diagnoseunterstützung oder Dokumentation von Befunden, mit einer gesten-basierten Eingabesteuerung, zum Zwecke der Annotation bzw. Kennzeichnung von Bereichen in einem digitalen Bild, z. B. im Einzeichen einer Objektkontur, auf.

Die gesten-basierte Eingabesteuerung des Systems kann beispielsweise mit einer einfachen Consumer-Kamera, z. B. einer Webcam, alternativ aber auch mit dreidimensionalen Kamerasystemen, TOF-Kameras, IR-Kameras (IR-Infrarot), oder anderen Kameras erfolgen.

Dabei kann ferner die Eingabe durch "intelligente Methoden" unterstützt werden, wie z. B. dem "Live-Wire"-Algorithmus, der die durch den Benutzer nur grob vorgegebenen Umrisse an den jeweiligen Bildinhalt anpasst, beispielsweise die Umrandung anhand der Kanteninformation aus Bildern an die Objektkonturen.

Somit ist ein mögliches technisches Anwendungsgebiet für Ausführungsbeispiele der vorliegenden Erfindung die interoperative Unterstützung der Befundung und/oder Dokumentation.

Ausführungsbeispiele des Verfahrens und des Systems ermöglichen somit eine interaktive Betrachtung von Bildern oder der Kommando-basierten Steuerung von Oparations-Gerätschaften unter Nutzung von einfachen Gesten, die sich auch durch sog. "Einzelwort"-Spracherkennungssysteme abbilden lassen, darüber hinaus jedoch aber auch eine interaktive Segmentierung von Bildern im Kontext einer Computer-assistierten Diagnose oder ähnlichen Anwendungen.

In Ausführungsbeispielen des Verfahrens und des Systems, bei denen eine Markierung von Bildbereichen ermöglicht wird, werden statische Gesten verwendet, die mittels Modellen und/oder positiv klassifizierten Bildausschnitten erkannt werden. Dabei muss die Bewegung im Gegensatz zu Verfahren zur Erkennung dynamischer Gesten, nicht klar von einer Nichtbewegung abgegrenzt sein, da in diesem Sinne auch keine Geste erzeugt wird, der eine direkte Bedeutung zuzuordnen ist, sondern durch das Erkennen der Geste und das Erfassen der Bewegung der Geste wird eine Segmentierung im Sinne eines Maus-Ersatzes gesteuert.

Abhängig von den Gegebenheiten können die Ausführungsbeispiele der erfindungsgemäßen Verfahren in Hardware oder in Software implementiert werden. Die Implementierung kann auf einem digitalen Speichermedium, insbesondere einer Diskette, CD oder DVD mit elektronisch auslesbaren Steuersignalen erfolgen, die so mit einem programmierbaren Computersystem zusammenwirken, dass eines der Ausführungsbeispiele der erfindungsgemäßen Verfahren ausgeführt wird. Allgemein bestehen die Ausführungsbeispiele der vorliegenden Erfindung somit auch in Software-Programm-Produkten, bzw. Computer-Programm-Produkten, bzw. Programm-Produkten mit einem auf einem maschinenlesbaren Träger gespeicherten Programmcode zur Durchführung eines der Ausführungsbeispiele der erfindungsgemäßen Verfahren, wenn eines der Softwareprogramm-Produkte auf einem Rechner oder auf einem Prozessor abläuft. In anderen Worten ausgedrückt, kann ein Ausführungsbeispiel der vorliegenden Erfindung somit als ein Computer-Programm bzw. Software-Programm bzw. Programm mit einem Programmcode zur Durchführung eines Ausführungsbeispiels eines erfindungsgemäßen Verfahrens realisiert werden, wenn das Programm auf einem Prozessor abläuft.

## Patentansprüche

1. Programm mit einem Programmcode zur Durchführung eines Verfahrens, wenn das Programm auf einem Rechner oder Prozessor abläuft, um ein Objekt in einem aktuellen Bild einer Folge von Bildern zu erkennen, wobei das Objekt zumindest in einem Bildausschnitt eines früheren Bildes der Folge von Bildern erkannt wurde, **gekennzeichnet durch**:
Auswählen (746) eines Bildausschnitts des aktuellen Bildes, wobei abhängig von einer Position des Bildausschnitts des früheren Bildes, in dem das Objekt erkannt wurde, in dem aktuellen Bild ein Umgebungsbereich definiert wird, in dem der Bildausschnitt des aktuellen Bildes für den Vergleich mit dem Bildausschnitt des früheren Bildes, in dem das Objekt erkannt wurde, ausgewählt wird;
Bestimmen (748) eines Ähnlichkeitsgrades zwischen dem Bildausschnitt des aktuellen Bildes und dem Bildausschnitt des früheren Bildes, in dem das Objekt erkannt wurde, mittels eines Vergleichs derselben; und
Erkennen (750) des Objektes in dem Bildausschnitt des aktuellen Bildes (620), wenn der Ähnlichkeitsgrad eine vorgegebene Ähnlichkeitsbedingung erfüllt.

2. Programm nach Anspruch 1, wobei der Ähnlichkeitsgrad die vorgegebene Ähnlichkeitsbedienung erfüllt, wenn der Ähnlichkeitsgrad in einem vorbestimmten Bereich von Ähnlichkeitsgraden liegt.

3. Programm nach einem der vorhergehenden Ansprüche, wobei die Größe des Umgebungsbereichs größer als der Bildausschnitt des früheren Bildes aber kleiner als das aktuelle Bild gewählt wird.

4. Programm nach einem der vorhergehenden Ansprüche: wobei das Verfahren ferner folgende Schritte aufweist, falls das Objekt zumindest in einem Bildausschnitt eines früheren Bildes der Folge von Bildern mittels eines Vergleichs mit einem Modell des Objektes erkannt wurde:
Vergleichen (716) einer Vielzahl von Bildausschnitten (714, 724) des aktuellen Bildes mit dem Modell, um zu erkennen (718), ob ein Bildausschnitt der Vielzahl von Bildausschnitten das Objekt aufweist, wobei die Vielzahl von Bildausschnitten gemäß einer ersten Reihenfolge mit dem Modell verglichen werden; und
Vergleichen (748) eines Bildausschnitts des aktuellen Bildes mit dem Bildausschnitt des früheren Bildes, in dem das Objekt erkannt wurde, um zu erkennen (750), ob der Bildausschnitt das Objekt aufweist, wenn (720) in keinem der Vielzahl von Bildausschnitten das Objekt durch den Vergleich derselben mit dem Modell erkannt wurde.

5. Programm nach Anspruch 4, wobei zum Erkennen, ob ein Bildausschnitt der Vielzahl von Bildausschnitten des aktuellen Bildes das Objekt aufweist, ein Vergleich (716) des Bildausschnitts mit dem Modell durchgeführt wird, um einen Ähnlichkeitsgrad zwischen dem Bildausschnitt und dem Modell zu bestimmen, und das Objekt in dem Bildausschnitt erkannt wird, wenn der Ähnlichkeitsgrad eine vorgegebene Ähnlichkeitsbedingung erfüllt; und
wobei zum Erkennen, ob der Bildausschnitt des aktuellen Bildes das Objekt aufweist, ein Vergleich (748) des Bildausschnitts des aktuellen Bildes mit dem Bildausschnitt des früheren Bildes, in dem das Objekt erkannt wurde, durchgeführt wird, um einen Ähnlichkeitsgrad zwischen dem Bildausschnitt des aktuellen Bildes und dem Bildausschnitt des früheren Bildes zu bestimmen, und das Objekt in dem Bildausschnitt erkannt wird, wenn der Ähnlichkeitsgrad eine vorgegebene Ähnlichkeitsbedingung erfüllt.

6. Programm nach Anspruch 4 oder 5, wobei der Bildausschnitt des früheren Bildes ein Originalbildausschnitt oder eine aufbereitete Darstellung desselben ist, und wobei der Bildausschnitt und die Vielzahl von Bildausschnitte des aktuellen Bildes Originalbildausschnitte oder aufbereitete Darstellungen derselben sind.

7. Programm zum Erkennen eines Objektes nach einem der Ansprüche 4 bis 6, wobei das Objekt in einem Bildausschnitt eines in der Folge von Bildern dem aktuellen Bild vorangehenden Bildes mittels eines Vergleichs mit dem Modell des Objektes oder mittels eines Vergleichs mit dem Bildausschnitt des früheren Bildes, in dem das Objekt erkannt wurde, erkannt wurde, und wobei abhängig von einer Position des Bildausschnitts des vorangehenden Bildes, in dem das Objekt erkannt wurde, in dem aktuellen Bild ein Umgebungsbereich definiert wird, in dem der Bildausschnitt des aktuellen Bildes für den Vergleich mit dem Bildausschnitt des früheren Bildes, in dem das Objekt erkannt wurde, ausgewählt wird.

8. Programm nach einem der Ansprüche 4 bis 7, wobei für den Schritt des Vergleichens (716) einer Vielzahl von Bildausschnitten des aktuellen Bildes mit dem Modell des Objekts, das aktuelle Bild zunächst darauf untersucht wird, ob das aktuelle Bild ein anderes Objekt aufweist, und die Vielzahl von Bildausschnitten für den Vergleich mit dem Modell des Objektes aus einem Teilbereich (420) des aktuellen Bildes (210) ausgewählt wird, wenn das aktuelle Bild das andere Objekt (410) aufweist, wobei der Teilbereich (420) in dem aktuellen Bild in einer vorgegebenen Position in Bezug auf eine Position des anderen Objektes (410) in dem aktuellen Bild angeordnet ist.

9. Programm mit einem Programmcode zur Durchführung eines Verfahrens, wenn das Programm auf einem Rechner oder Prozessor abläuft, um eine Markierung in einer Bildschirmdarstellung mittels eines gestikgesteuerten Cursors zu erzeugen, wobei das Verfahren folgende Schritte aufweist:
Durchführen des Verfahrens nach einem der Ansprüche 1 bis 8 zum Erkennen eines ersten und eines zweiten Objekts in Form einer ersten und einer zweiten Handgeste;
Versetzen (810) des Cursors in einen ersten Zustand, wenn die erste Handgeste erkannt wird, woraufhin der Cursor in dem ersten Zustand in der Bilddarstellung entsprechend einer relativen Bewegung der Hand bewegbar ist; und
Versetzen (820) des Cursors in einen zweiten Zustand, wenn die zweite Handgeste erkannt wird, woraufhin ein Verlauf einer weiteren Bewegung des sich in dem zweiten Zustand befindenden Cursors in der Bildschirmdarstellung entsprechend einer weiteren relativen Bewegung der Hand dargestellt wird, um die Markierung zu erzeugen.

10. Programm nach Anspruch 9, mit dem folgenden weiteren Schritt:
Versetzen (830) des Cursors in einen Grundzustand, wenn eine dritte Handgeste oder keine Handgeste erkannt wird, woraufhin der Cursor von einer relativen Bewegung der Hand entkoppelt wird.

11. System zum Erkennen eines Objektes in einem aktuellen Bild einer Folge von Bildern, wobei das Objekt zumindest in einem Bildausschnitt eines früheren Bildes der Folge von Bildern erkannt wurde, **gekennzeichnet durch**:
eine Kamera (110) zum Erzeugen der Folge von Bildern; und
eine Steuereinheit (120), die ausgebildet ist, um
einen Bildausschnitt des aktuellen Bildes auszuwählen, wobei abhängig von einer Position des Bildausschnitts des früheren Bildes, in dem das Objekt erkannt wurde, in dem aktuellen Bild ein Umgebungsbereich definiert wird, in dem der Bildausschnitt des aktuellen Bildes für den Vergleich mit dem Bildausschnitt des früheren Bildes, in dem das Objekt erkannt wurde, ausgewählt wird;
einen Ähnlichkeitsgrad zwischen dem Bildausschnitt des aktuellen Bildes und dem Bildausschnitt des früheren Bildes zu bestimmen, in dem das Objekt erkannt wurde, mittels eines Vergleichs derselben; und
das Objekt in dem Bildausschnitt des aktuellen Bildes zu erkennen, wenn der Ähnlichkeitsgrad eine vorgegebene Ähnlichkeitsbedingung erfüllt.

12. System nach Anspruch 11, wobei die Steuereinheit (120) ferner ausgebildet ist, um die Größe des Umgebungsbereichs größer als der Bildausschnitt des früheren Bildes aber kleiner als das aktuelle Bild zu wählen.

13. System nach Anspruch 11 oder 12, wobei die Größe des Umgebungsbereichs so gewählt ist, dass abhängig von einer Bildfolgefrequenz eine typische oder maximale translatorische Bewegung des Objekts von einem Bild zum nächsten in dem Umgebungsbereich liegt.

14. System nach einem der Ansprüche 11 bis 13,
wobei die Steuereinheit (120) ferner ausgebildet ist, falls das Objekt zumindest in einem Bildausschnitt eines früheren Bildes der Folge von Bildern mittels eines Vergleichs mit einem Modell des Objektes erkannt wurde, um
eine Vielzahl von Bildausschnitten (714, 724) des aktuellen Bildes mit dem Modell zu vergleichen, um zu erkennen (718), ob ein Bildausschnitt der Vielzahl von Bildausschnitten das Objekt aufweist, wobei die Vielzahl von Bildausschnitten gemäß einer ersten Reihenfolge mit dem Modell verglichen werden; und
einen Bildausschnitts des aktuellen Bildes mit dem Bildausschnitt des früheren Bildes, in dem das Objekt erkannt wurde, zu vergleichen, um zu erkennen (750), ob der Bildausschnitt das Objekt aufweist, wenn (720) in keinem der Vielzahl von Bildausschnitten das Objekt durch den Vergleich derselben mit dem Modell erkannt wurde.

15. System zum Erzeugen einer Markierung in einer Bildschirmdarstellung mittels eines gestik-gesteuerten Cursors mit den folgenden Merkmalen:
System zum Erkennen eines Objektes in einem aktuellen Bild einer Folge von Bildern nach einem der Ansprüche 11 bis 14, das ausgebildet ist, um ein erstes und ein zweites Objekts in Form einer ersten und einer zweiten Handgeste zu erkennen; und
einem Bildschirm (130) für die Bildschirmdarstellung;
wobei die Steuereinheit (120) ferner ausgebildet ist, um
den Cursor in einen ersten Zustand zu versetzen, wenn die Steuereinheit in einem von der Kamera erzeugten Bild oder einer von der Kamera erzeugten Bildfolge die erste Handgeste erkennt, woraufhin der sich in dem ersten Zustand befindende Cursor in der Bilddarstellung entsprechend einer relativen Bewegung der Hand bewegbar ist; und
den Cursor in einen zweiten Zustand zu versetzen, wenn die Steuereinheit in einem von der Kamera erzeugten Bild oder einer von der Kamera erzeugten Bildfolge die zweite Handgeste erkennt, wobei die Steuereinheit ferner ausgebildet ist, um einen Verlauf einer weiteren Bewegung des sich in dem zweiten Zustand befindenden Cursors in der Bildschirmdarstellung entsprechend einer weiteren relativen Bewegung der Hand darzustellen, um die Markierung zu erzeugen.

## Claims

1. A program comprising a program code for performing a method when the program runs on a computer or processor for recognizing an object in a current image of a sequence of images, the object having been recognized at least in an image portion of a previous image of the sequence of images, **characterized by**:
selecting (746) an image portion of the current image, wherein, depending on a position of the image portion of the previous image where the object has been recognized, a surrounding region is defined in the current image in which the image portion of the current image is selected for comparison to the image portion of the previous image where the object has been recognized;
determining (748) a degree of similarity between the image portion of the current image and the image portion of the previous image where the object has been recognized, by means of comparing same; and
recognizing (750) the object in the image portion of the current image (620) when the degree of similarity fulfills a predetermined similarity condition.

2. The program in accordance with claim 1, wherein the degree of similarity fulfills the predetermined similarity condition when the degree of similarity is in a predetermined region of degrees of similarity.

3. The program in accordance with any of the preceding claims, wherein the size of the surrounding region is selected to be greater than the image portion of the previous image but smaller than the current image.

4. The program in accordance with any of the preceding claims: wherein the method further comprises, if the object has been recognized at least in an image portion of a previous image of the sequence of images by means of comparison to a model of the object:
comparing (716) a plurality of image portions (714, 724) of the current image to the model in order to recognize (718) whether an image portion of the plurality of image portions comprises the object, wherein the plurality of image portions are compared to the model in accordance with a first order; and
comparing (748) an image portion of the current image to the image portion of the previous image where the object has been recognized in order to recognize (750) whether the image portion comprises the object when the object has not been recognized in any of the plurality of image portions by comparing same to the model (720).

5. The program in accordance with claim 4, wherein, for recognizing whether an image portion of the plurality of image portions of the current image comprises the object, a comparison (716) of the image portion to the model is performed in order to determine a degree of similarity between the image portion and the model, and the object is recognized in the image portion when the degree of similarity fulfills a predetermined similarity condition; and
wherein, for recognizing whether the image portion of the current image comprises the object, a comparison (748) of the image portion of the current image to the image portion of the previous image where the object has been recognized is performed in order to determine a degree of similarity between the image portion of the current image and the image portion of the previous image, and the object is recognized in the image portion when the degree of similarity fulfills a predetermined similarity condition.

6. The program in accordance with claim 4 or 5, wherein the image portion of the previous image is an original image portion of a processed representation thereof, and wherein the image portions and the plurality of image portions of the current image are original image portions or processed representations thereof.

7. The program for recognizing an object in accordance with any of claims 4 to 6, wherein the object has been recognized in an image portion of one image preceding the current image in the sequence of images by means of a comparison to the model of the object or by means of comparison to the image portion of the previous image where the object has been recognized, and wherein, depending on a position of the image portion of the previous image where the object has been recognized, a surrounding region is defined in the current image in which the image portion of the current image is selected for comparison to the image portion of the previous image where the object has been recognized.

8. The program in accordance with any of claims 4 to 7, wherein, for the step of comparing (716) a plurality of image portions of the current image to the model of the object, the current image is at first examined as the whether the current image comprises another object, and the plurality of image portions is selected for the comparison to the model of the object from a subregion (420) of the current image (210) when the current image comprises the other object (410), wherein the subregion (420) in the current image is arranged in the current image at a predetermined position relative to a position of the other object (410).

9. A program comprising a program code for performing a method when the program runs on a computer or processor for generating a mark in a screen representation by means of a cursor controlled by means of gestures, the method comprising:
performing the method in accordance with any of claims 1 to 8 for recognizing a first and a second object in the form of a first and a second hand gesture;
placing (810) the cursor in a first state when the first hand gesture is recognized, whereupon the cursor in the first state may be moved in the image representation in accordance with a relative movement of the hand; and
placing (820) the cursor in a second state when the second hand gesture is recognized, whereupon a course of another movement of the cursor in the second state is represented in the image representation in correspondence with another relative movement of the hand in order to generate the mark.

10. The program in accordance with claim 9, further comprising:
placing (830) the cursor in a basic state when a third hand gesture or no hand gesture is recognized, whereupon the cursor is decoupled from a relative movement of the hand.

11. A system for recognizing an object in a current image of a sequence of images, wherein the object has been recognized at least in an image portion of a previous image of the sequence of images **characterized by**:
a camera (110) for generating the sequence of images; and
a control unit (120) configured for:
selecting an image portion of the current image, wherein, depending on a position of the image portion of the previous image where the object has been recognized, a surrounding region is defined in the current image in which the image portion of the current image is selected for comparison to the image portion of the previous image where the object has been recognized;
determining a degree of similarity between the image portion of the current image and the image portion of the previous image where the object has been recognized, by means of comparing same; and
recognizing the object in the image portion of the current image when the degree of similarity fulfills a predetermined similarity condition.

12. The system in accordance with claim 11, wherein the control unit (120) is additionally configured to select the size of the surrounding region to be greater than the image portion of the previous image but smaller than the current image.

13. The system in accordance with claim 11 or 12, wherein the size of the surrounding region is selected such that, depending on an image sequence frequency, a typical or maximum translatory movement of the object from one image to the next is in the surrounding region.

14. The system in accordance with any of claims 11 to 13,
wherein the control unit (120) is additionally configured, if the object has been recognized at least in an image portion of a previous image of the sequence of images by means of comparison to a model of the object, for:
comparing a plurality of image portions (714, 724) of the current image to a model in order to recognize (718) whether an image portion of the plurality of image portions comprises the object, wherein the plurality of image portions are compared to the model in accordance with a first order; and
comparing an image portion of the current image to the image portion of the previous image where the object has been recognized in order to recognize (750) whether the image portion comprises the object when the object has not been recognized in any of the plurality of image portions by comparing same to the model (720).

15. A system for generating a mark in a screen representation by means of a cursor controlled by gestures, comprising:
a system for recognizing an object in a current image of a sequence of images in accordance with any of claims 11 to 14 configured to recognize a first and a second object in the form of a first and a second hand gesture; and
a screen (130) for screen representation;
wherein the control unit (120) is additionally configured for:
placing the cursor in a first state when the control unit recognizes the first hand gesture in an image generated by the camera or an image sequence generated by the camera, whereupon the cursor in the first state is movable in the image representation in correspondence with a relative movement of the hand; and
placing the cursor in a second state when the control unit recognizes the second hand gesture in an image generated by the camera or an image sequence generated by the camera, wherein the control unit is additionally configured to represent a course of another movement of the cursor in the second state in the screen representation in correspondence with another relative movement of the hand in order to generate the mark.

## Revendications

1. Programme avec un code de programme pour réaliser un procédé, lorsque le programme est exécuté sur un ordinateur ou un processeur, pour détecter un objet dans une image actuelle d'une séquence d'images, l'objet ayant été détecté au moins dans un segment d'une image antérieure de la séquence d'images, **caractérisé par** le fait de:
sélectionner (746) un segment de l'image actuelle, où en fonction d'une position du segment de l'image antérieure dans lequel a été détecté l'objet est définie dans l'image actuelle une zone environnante dans laquelle est sélectionné le segment de l'image actuelle pour la comparaison avec le segment de l'image antérieure dans lequel l'objet a été détecté;
déterminer (748) un degré de similitude entre le segment de l'image actuelle et le segment de l'image antérieure dans lequel l'objet a été détecté, à l'aide d'une comparaison de ces derniers; et
détecter (750) l'objet dans le segment de l'image actuel (620) lorsque le degré de similitude remplit une condition de similitude prédéterminée.

2. Programme selon la revendication 1, dans lequel le degré de similitude remplit la condition de similitude prédéterminée lorsque le degré de similitude se situe dans une plage prédéterminée de degrés de similitude.

3. Programme selon l'une des revendications précédentes, dans lequel la grandeur de la zone environnante est sélectionnée plus grande que le segment d'image de l'image antérieure, mais plus petite que l'image actuelle.

4. Programme selon l'une des revendications précédentes, dans lequel: le procédé présente par ailleurs les étapes suivantes, si l'objet a été détecté au moins dans un segment d'une image antérieure de la séquence d'images à l'aide d'une comparaison avec un modèle de l'objet:
comparer (716) une pluralité de segments (714, 724) de l'image actuelle avec le modèle, pour détecter (718) si un segment d'image de la pluralité de segments d'image présente l'objet, la pluralité de segments d'image étant comparés selon une première séquence avec le modèle; et
comparer (748) un segment de l'image actuelle avec le segment de l'image antérieure dans lequel l'objet a été détecté, pour détecter (750) si le segment d'image présente l'objet lorsque (720) dans aucune de la pluralité de segments d'image n'a été détecté l'objet en le comparant avec le modèle.

5. Programme selon la revendication 4, dans lequel est réalisée, pour détecter si un segment d'image de la pluralité de segments de l'image actuelle présente l'objet, une comparaison (716) du segment d'image avec le modèle, pour déterminer un degré de similitude entre le segment d'image et le modèle, et l'objet est détecté dans le segment d'image lorsque le degré de similitude remplit une condition de similitude prédéterminée; et
dans lequel est réalisée, pour détecter si le segment de l'image actuelle présente l'objet, une comparaison (748) du segment de l'image actuelle avec le segment de l'image antérieure dans lequel l'objet a été détecté, pour déterminer un degré de similitude entre le segment de l'image actuelle et le segment de l'image antérieure, et l'objet est détecté dans le segment d'image lorsque le degré de similitude remplit une condition de similitude prédéterminée.

6. Programme selon la revendication 4 ou 5, dans lequel le segment de l'image antérieure est un segment d'image original ou une représentation traitée de ce dernier, et dans lequel le segment d'image et la pluralité de segments de l'image actuelle sont des segments d'image originaux ou des représentations traitées de ces derniers.

7. Programme pour détecter un objet selon l'une des revendications 4 à 6, dans lequel l'objet est détecté dans un segment d'une image précédant l'image actuelle dans la séquence d'images au moyen d'une comparaison avec le modèle de l'objet, ou au moyen d'une comparaison avec le segment de l'image antérieure dans lequel l'objet a été détecté, et dans lequel est définie, en fonction d'une position du segment de l'image précédente dans lequel l'objet a été détecté, dans l'image actuelle une zone environnante dans laquelle le segment de l'image actuelle est sélectionnée aux fins de la comparaison avec le segment de l'image antérieure dans lequel l'objet a été détecté.

8. Programme selon l'une des revendications 4 à 7, dans lequel, pour l'étape consistant à comparer (716) une pluralité de segments de l'image actuelle avec le modèle de l'objet, l'image actuelle est tout d'abord examinée pour savoir si l'image actuelle présente un autre objet, et la pluralité de segments d'image pour la comparaison avec le modèle de l'objet sont sélectionnés dans une zone partielle (420) de l'image actuelle (210) lorsque l'image actuelle présente l'autre objet (410), la zone partielle (420) dans l'image actuelle étant disposée en une position prédéterminée par rapport à une position de l'autre objet (410) dans l'image actuelle.

9. Programme avec un code de programme pour réaliser un procédé, lorsque le programme est exécuté sur un ordinateur ou un processeur, pour générer un marquage dans une représentation à écran au moyen d'un curseur à commande par geste, le procédé présentant les étapes suivantes consistant à:
réaliser le procédé selon l'une des revendications 1 à 8 pour détecter un premier et un deuxième objet sous forme d'un premier et un deuxième geste de la main;
déplacer (810) le curseur dans un premier état lorsque le premier geste de la main est détecté, après quoi le curseur peut être déplacé dans le premier état dans la représentation d'image correspondant à un premier mouvement relatif de la main; et
déplacer (820) le curseur dans un deuxième état lorsque le deuxième geste de la main est détecté, après quoi une évolution d'un autre mouvement du curseur se trouvant dans le deuxième état est représentée dans la représentation à l'écran selon un autre mouvement relatif de la main, pour générer le marquage,

10. Programme selon la revendication 9, à l'étape additionnelle suivante consistant à:
déplacer (830) le curseur à un état de base lorsqu'un troisième geste de la main est ou aucun geste de la main n'est détecté, après quoi le curseur est découplé d'un mouvement relatif de la main.

11. Système pour détecter un objet dans une image actuelle d'une séquence d'images, dans lequel l'objet a été détecté au moins dans un segment d'une image antérieure de la séquence d'images, **caractérisé par**:
une caméra (110) destinée à générer la séquence d'images; et
une unité de commande (120) qui est réalisée pour
sélectionner un segment de l'image actuelle, où est défini, en fonction d'une position du segment de l'image antérieure dans lequel l'objet a été détecté, dans l'image actuelle une zone environnante dans laquelle le segment de l'image actuelle est sélectionné pour la comparaison avec le segment de l'image antérieure dans lequel l'objet a été détecté;
déterminer un degré de similitude entre le segment de l'image actuelle et le segment de l'image antérieure dans lequel l'objet a été détecté au moyen d'une comparaison de ces derniers; et détecter l'objet dans le segment de l'image actuelle lorsque le degré de similitude remplit une condition de similitude prédéterminée.

12. Système selon la revendication 11, dans lequel l'unité de commande (120) est par ailleurs réalisée pour choisir la grandeur de la zone environnante plus grande que segment de l'image antérieure, mais plus petite que l'image actuelle.

13. Système selon la revendication 11 ou 12, dans lequel la grandeur de la zone environnante est choisie de sorte que, en fonction d'une fréquence de séquence d'images, un mouvement de translation typique ou maximum de l'objet d'une image à l'autre se situe dans la zone environnante.

14. Système selon l'une quelconque des revendications 11 à 13,
dans lequel l'unité de commande (120) est par ailleurs réalisé, si l'objet a été détecté au moins dans un segment d'une image antérieure de la séquence d'images au moyen d'une comparaison avec un modèle de l'objet, pour
comparer une pluralité de segments d'image (714, 724) de l'image actuelle avec le modèle, pour détecter (718) si un segment d'image de la pluralité de segments d'image présente l'objet, où la pluralité de segments d'image sont comparés avec le modèle selon une première succession; et
comparer un segment de l'image actuelle avec le segment de l'image antérieure dans lequel l'objet a été détecté, pour détecter (750) si la segment d'image présente l'objet lorsque (720) dans aucun de la pluralité de segments d'image n'a été détecté l'objet par la comparaison de ce dernier avec le modèle.

15. Système pour générer un marquage dans une représentation à l'écran à l'aide d'un curseur commandé par gestes, aux caractéristiques suivantes:
un système pour détecter un objet dans une image actuelle d'une séquence d'images selon l'une des revendications 11 à 14 qui est réalisé pour détecter un premier et un deuxième objet sous forme d'un premier et d'un deuxième geste de la main; et
un écran d'affichage (130) pour la représentation à l'écran;
dans lequel l'unité de commande (120) est par ailleurs réalisé pour
déplacer le curseur dans un premier état lorsque l'unité de commande détecte, dans une image générée par la caméra ou dans une séquence d'images générées par la caméra, le premier geste de la main, après quoi le curseur se trouvant dans le premier état peut être déplacé dans la représentation d'image selon un déplacement relatif de la main; et
déplacer le curseur dans un deuxième état lorsque l'unité de commande détecte, dans une image générée par la caméra ou dans une séquence d'images générées par la caméra, le deuxième geste de la main, l'unité de commande étant par ailleurs réalisée pour représenter une évolution d'un autre mouvement du curseur se trouvant dans le deuxième état dans la représentation à l'écran selon un autre mouvement relatif de la main, pour générer le marquage.
